(19) Europäisches Patentamt
European Patent Office
Office européen des brevets

(11) **EP 2 924 673 B1**

(12) **EUROPEAN PATENT SPECIFICATION**

(45) Date of publication and mention of the grant of the patent:
**15.03.2017 Bulletin 2017/11**

(51) Int Cl.:
*G08G 1/16* (2006.01)  *G01H 17/00* (2006.01)
*G01S 3/808* (2006.01)  *G01S 3/86* (2006.01)

(21) Application number: **12888813.8**

(22) Date of filing: **22.11.2012**

(86) International application number:
**PCT/JP2012/080384**

(87) International publication number:
**WO 2014/080504 (30.05.2014 Gazette 2014/22)**

(54) **SOUND DETECTION DEVICE AND METHOD, DRIVING ASSISTANCE DEVICE AND METHOD, AS WELL AS NOTIFICATION DEVICE AND METHOD**

SCHALLDETEKTIONSVORRICHTUNG UND -VERFAHREN, FAHRHILFEVORRICHTUNG UND -VERFAHREN SOWIE BENACHRICHTIGUNGSVORRICHTUNG UND -VERFAHREN

DISPOSITIF ET PROCÉDÉ DE DÉTECTION DE SON, DISPOSITIF ET PROCÉDÉ D'ASSISTANCE À LA CONDUITE ET DISPOSITIF ET PROCÉDÉ DE NOTIFICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**30.09.2015 Bulletin 2015/40**

(73) Proprietor: **TOYOTA JIDOSHA KABUSHIKI KAISHA**
**Toyota-shi, Aichi-ken, 471-8571 (JP)**

(72) Inventors:
• **KINDO Toshiki**
  **Toyota-shi**
  **Aichi 471-8571 (JP)**
• **FUKAMACHI Hideo**
  **Toyota-shi**
  **Aichi 471-8571 (JP)**

• **HANITA Kiyoto**
  **Toyota-shi**
  **Aichi 471-8571 (JP)**
• **KAMINADE Takuya**
  **Toyota-shi**
  **Aichi 471-8571 (JP)**
• **KAWAMATA Shinya**
  **Toyota-shi**
  **Aichi 471-8571 (JP)**

(74) Representative: **D Young & Co LLP**
**120 Holborn**
**London EC1N 2DY (GB)**

(56) References cited:
**WO-A1-2011/092813  WO-A1-2012/095939**
**WO-A1-2012/115205  WO-A1-2012/147187**
**JP-A- 2007 091 028  JP-A- 2012 145 461**

## Description

### Technical Field

The invention relates to a sound detection device and method, a driving assistance device and method, and a notification device and method.

### Background Art

In the related art, in regard to a sound detection device and method, a driving assistance device and method, and a notification device and method, for example, as described in Japanese Unexamined Utility Model Registration Application Publication No. 5-92767, a technique which detects a surrounding object, which becomes a local sound source, based on the correlation between sound signals from the outside collected by a plurality of microphones, and performs driving assistance based on the detection result is known.

### Citation List

### Patent Literature

[Patent Literature 1] Japanese Unexamined Utility Model Registration Application Publication No. 5-92767
[Patent Literature 2] WO 2012/115205 A1 relates to an approaching vehicle detection device for detecting an approaching vehicle on the basis of sound collected by a plurality of sound collectors, and is characterized in that a sound source (particularly the running sound of a vehicle) is detected using closely spaced pairs of sound collectors, and the approach of the sound source is detected using a pair of sound collectors that are disposed more widely spaced apart than the pairs of sound collectors.

### Summary of Invention

### Technical Problem

However, for example, in a situation in which sound from the local sound source is mixed with surrounding noise and the degree of correlation between sound signals is not conspicuous, a surrounding object may not be detected with excellent accuracy.

Accordingly, the invention provides a sound detection device and method, a driving assistance device and method, and a notification device and method capable of detecting a surrounding object based on a degree of temporal fluctuation of phase information of sound signals with excellent accuracy.

### Solution to Problem

A sound detection device according to the invention includes two or more sound collection units disposed apart from one another, and a surrounding object detection unit configured to detect a surrounding object based on a degree of temporal fluctuation of phase information of sound signals collected by at least two of the two or more sound collection units. With this, it is possible to detect the surrounding object based on the degree of temporal fluctuation of the phase information of the sound signals with excellent accuracy even in a situation in which the degree of correlation between the sound signals is not conspicuous.

The surrounding object detection unit may detect the surrounding object based on a degree of temporal fluctuation of phase information obtained from at least one of the phase difference or phase correlation between the sound signals collected by at least two of the two or more sound collection units.

The surrounding object detection unit may detect the surrounding object based on a degree of temporal fluctuation of a phase executed, for example, based on the stability index, the peak value of the phase distribution, and the degree of fluctuation of the sound source direction.

As described above, according to the sixth embodiment of the invention, it is possible to control a notification to the outside of the vehicle based on the degree of temporal fluctuation of the phase information of the sound signals even in a situation in which the degree of correlation between the sound signals is not conspicuous.

It should be noted that the foregoing embodiments describe a best mode for carrying out the sound detection device and method, the driving assistance device and method, and the notification device and method according to the invention, and that the sound detection device and method, and the driving assistance device and method, and the notification device and method according to the invention are not limited to those described in conjunction with the embodiments. The sound detection device and method, the driving assistance device and method, and the notification device and method according to the invention may be those obtained by modifying the sound detection device and method, the driving assistance device and method, and the notification device and method according to the embodiments or by applying them to other, without departing from the scope of the claims.

For example, in the first to fourth embodiments, a case where the microphone array 11 is constituted by the two microphones 11a and 11b, and sound signal information of all microphones constituting the microphone array 11 is used has been described. However, when a microphone array is constituted by three or more microphones, sound degree of fluctuation of the phase distribution decreases and a specific phase difference corresponding to a peak of the phase distribution increases, and the surrounding object detection unit may determine that the surrounding object is present when the peak value of the phase distribution is equal to or greater than the threshold value.

The surrounding object detection unit may be more likely to determine a presence of the surrounding object to be greater as the specific phase difference corresponding to the peak of the phase distribution increases.

The surrounding object detection unit may be more likely to determine the surrounding object, which becomes the local sound source, to be closer as the degree of fluctuation of the specific phase difference decreases.

The surrounding object detection unit may be likely to determine that the surrounding object is approaching when the degree of fluctuation of the specific phase difference becomes small with time.

The surrounding object detection unit may be likely to determine the surrounding object, which becomes the local sound source, to separate farther as the degree of fluctuation of the specific phase difference increases.

The surrounding object detection unit may be likely to determine that the surrounding object is separating when the degree of fluctuation of the specific phase difference becomes great with time.

The sound detection device may be mounted in a vehicle.

A sound detection method according to the invention includes collecting sound in two or more positions apart from one another, and detecting a surrounding object based on a degree of temporal fluctuation of phase information of sound signals collected in at least two positions of the two or more positions. With this, it is possible to detect the surrounding object based on the degree of temporal fluctuation of the phase information of the sound signals with excellent accuracy even in a situation in which the degree of correlation between the sound signals is not conspicuous.

A driving assistance device according to the invention includes two or more sound collection units disposed apart from one another, and a driving assistance control unit configured to control driving assistance of a vehicle based on a degree of temporal fluctuation of phase information of sound signals collected by at least two of the two or more sound collection units. With this, it is possible to control the driving assistance of the vehicle based on the degree of temporal fluctuation of the phase information of the sound signals even in a situation in which the degree of correlation between the sound signals is not conspicuous.

The driving assistance control unit may further facilitate the driving assistance as the degree of fluctuation of the phase information decreases.

A driving assistance method according to the invention includes collecting sound in two or more positions apart from one another, and controlling driving assistance of a vehicle based on a degree of temporal fluctuation of phase information of sound signals collected in at least two positions of the two or more positions. With this, it is possible to perform the driving assistance of the vehicle based on the degree of temporal fluctuation of the phase information of the sound signals even in a situation in which the degree of correlation between the sound signals is not conspicuous.

A notification device according to the invention includes two or more sound collection units disposed apart from one another, and a notification control unit configured to control a notification to the outside of a vehicle based on a degree of temporal fluctuation of phase information of sound signals collected by at least two of the two or more sound collection units. With this, it is possible to control the notification to the outside of the vehicle based on the degree of temporal fluctuation of the phase information of the sound signals even in a situation in which the degree of correlation between the sound signals is not conspicuous.

A notification method according to the invention includes collecting sound in two or more positions apart from one another, and controlling a notification to the outside of a vehicle based on a degree of temporal fluctuation of phase information of sound signals collected in at least two positions of the two or more positions. With this, it is possible to control the notification to the outside of the vehicle based on the degree of temporal fluctuation of the phase information of the sound signals even in a situation in which the degree of correlation between the sound signals is not conspicuous.

**Advantageous Effects of Invention**

According to the invention, it is possible to provide a sound detection device and method, a driving assistance device and method, and a notification device and method capable of detecting a surrounding object based on the degree of temporal fluctuation of the phase information of the sound signals with excellent accuracy.

**Brief Description of Drawings**

Fig. 1 is a block diagram showing a driving assistance device according to a first embodiment.

Fig. 2 is a flowchart showing a driving assistance method according to the first embodiment.

Fig. 3 is a diagram showing an example of a situation in which the driving assistance method according to the first embodiment is applied.

Fig. 4 is a diagram schematically showing a degree of fluctuation of a phase distribution when a surrounding vehicle is far away and when a surrounding vehicle is approaching.

Fig. 5 is a diagram showing a temporal change in a stability index and a temporal change in a degree of correlation between sound signals in contrast.

Fig. 6 is a block diagram showing a driving assistance device according to a second embodiment.

Fig. 7 is a flowchart showing a driving assistance method according to the second embodiment.

Fig. 8 is a block diagram showing a driving assistance device according to a third embodiment.

Fig. 9 is a diagram showing a calculation method of a sound source direction.

Fig. 10 is a flowchart showing a driving assistance method according to the third embodiment.

Fig. 11 is a diagram showing an example of a situation in which the driving assistance method according to the third embodiment is applied.

Fig. 12 is a table showing an experimental result relating to a detection timing of a surrounding vehicle.

Fig. 13 is a block diagram showing a driving assistance device according to a fourth embodiment.

Fig. 14 is a diagram showing a calculation method of a sound source direction.

Fig. 15 is a flowchart showing a driving assistance method according to the fourth embodiment.

Fig. 16 is a diagram showing an example of a situation in which the driving assistance method according to the fourth embodiment is applied.

Fig. 17 is a schematic view showing an example of temporal changes in a sound source direction and a variance in connection with Fig. 16.

Fig. 18 is a block diagram showing a driving assistance device according to a fifth embodiment.

Fig. 19 is a diagram showing a calculation method of a sound source direction.

Fig. 20 is a flowchart showing a driving assistance method according to the fifth embodiment.

Fig. 21 is a diagram showing an example of a situation in which the driving assistance method according to the fifth embodiment is applied.

Fig. 22 is a diagram showing a fluctuation trend of a sound source direction and a correlation value in connection with Fig. 21.

**Description of Embodiments**

Hereinafter, a sound detection device and method, a driving assistance device and method, and a notification device and method according to an embodiment of the invention will be described in detail referring to the accompanying drawings. In the description of the drawings, the same components are represented by the same reference numerals, and overlapping description will be omitted.

The sound detection device and method detects a surrounding object based on a degree of temporal fluctuation of phase information of sound signals collected in at least two positions of two or more positions apart from one another. The driving assistance device and method controls driving assistance of a vehicle based on a degree of temporal fluctuation of phase information of sound signals collected in at least two positions of two or more positions apart from one another. The notification device and method controls a notification to the outside of a vehicle based on a degree of temporal fluctuation of phase information of sound signals collected in at least two positions of two or more positions apart from one another. The degree of temporal fluctuation of the phase information of the sound signals means a degree of temporal fluctuation of phase information obtained from at least one of the phase difference or phase correlation between the sound signals.

The driving assistance device and method and the notification device and method have an aspect as the sound detection device and method. For this reason, hereinafter, the sound detection device and method according to an embodiment will be described using the driving assistance device and method and the notification device and method according to an embodiment of the invention.

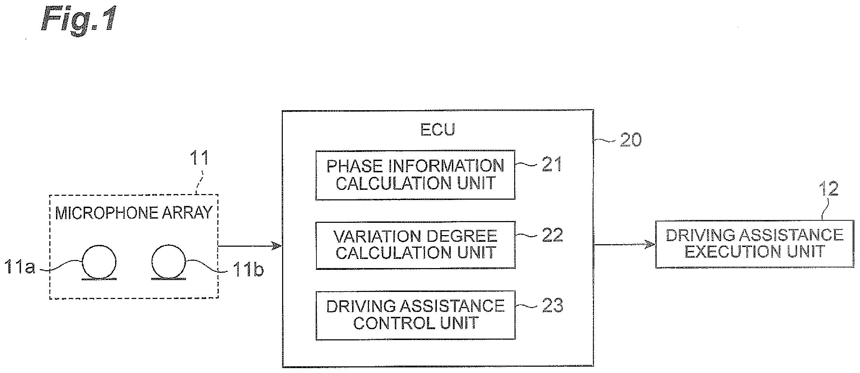

First, a driving assistance device and method according to a first embodiment of the invention will be described referring to Figs. 1 to 5. In the first embodiment, driving assistance of a vehicle is performed based on a degree of temporal fluctuation of a phase distribution representing the relationship of the phase difference between sound signals collected by at least two of two or more sound collection units and the phase correlation between the sound signals in the same phase difference. For example, the degree of fluctuation of the phase distribution is determined using a stability index described below.

Fig. 1 is a block diagram showing the driving assistance device according to the first embodiment. As shown in Fig. 1, the driving assistance device is mounted in a vehicle, and is constituted focusing on an electronic control unit 20 (hereinafter, abbreviated as an ECU 20) which performs the driving assistance of the vehicle.

A microphone array 11 is connected to the ECU 20. The microphone array 11 constitutes two or more sound collection units disposed apart from one another. For example, the microphone array 11 is constituted by one or more microphones 11a and 11b disposed on each of the right and left sides of the front surface of the vehicle.

Sound signals from the outside collected by the microphones 11a and 11b are input to the ECU 20. The sound signals are processed by, for example, a microphone amplifier, a band-pass filter, an A/D converter, and the like and are input. Hereinafter, description will be provided assuming a case where a first sound signal collected and processed by the microphone 11a and a second sound signal collected and processed by the microphone 11b are input.

A driving assistance execution unit 12 is connected to the ECU 20. The driving assistance execution unit 12 includes human-machine interfaces (hereinafter, abbreviated as HMIs) and actuators.

As the HMIs, for example, a monitor, a speaker, a vibrator, and the like are used. The HMIs are used to perform notification assistance to the driver of the vehicle using visual information, auditory information, and tactile information. As the actuators, a brake actuator, a steering actuator, a seatbelt actuator, and the like are used. The actuators control a brake device, a steering device, and a seatbelt device, and are used to perform driving assistance for avoiding collision with a surrounding object and driving assistance for stabilizing vehicle behavior.

The notification assistance includes alerting the driver and prompting the driver to execute a predetermined driving operation. The collision avoidance includes collision avoidance by a braking intervention and collision avoidance by a steering intervention. The braking intervention includes, for example, automatic braking and assistance of a braking force, and the steering intervention includes automatic steering and assistance of steering.

The ECU 20 includes a phase information calculation unit 21, a fluctuation degree calculation unit 22, and a driving assistance control unit 23. The ECU 20 is primarily constituted by a CPU, a ROM, a RAM, and the like, and implements the functions of the phase information calculation unit 21, the fluctuation degree calculation unit 22, and the driving assistance control unit 23 through the execution of a program on the CPU. The functions of the phase information calculation unit 21, the fluctuation degree calculation unit 22, and the driving assistance control unit 23 may be implemented by two or more ECUs.

The phase information calculation unit 21 calculates phase information of sound signals from the outside collected by the microphones 11a and 11b. The phase information calculation unit 21 calculates a phase distribution representing the relationship of the phase difference between sound signals collected by at least two of two or more sound collection units and the phase correlation between the sound signals in the same phase difference. The phase distribution is calculated by collecting the first sound signal using one sound collection unit, collecting the second sound signal using the other sound collection unit, delaying the second sound signal with a plurality of delay quantities, and obtaining the phase correlation between the first sound signal and the second sound signal delayed with each delay quantity.

For example, a plurality of delay quantities are set as a delay quantity $\tau = \tau min, ..., -2, -1, 0, 1, 2, ...,$ and $\tau max$ (tap). For example, the phase correlation is obtained as a general cross-correlation coefficient (GCC-PHAT) in order to calculate a cross-correlation function only with a phase component by whitening target sound. The phase distribution is calculated as a discrete data group representing the relationship of the phase difference and the phase correlation in the same phase difference, and is expressed as a graph, in which one axis is a phase difference corresponding to a delay quantity and the other axis is a phase correlation.

The fluctuation degree calculation unit 22 calculates a degree of temporal fluctuation of the phase information calculated by the phase information calculation unit 21. The fluctuation degree calculation unit 22 calculates a degree of temporal fluctuation of the phase distribution described above. The degree of fluctuation of the phase distribution is expressed, for example, using a change in a distribution shape, a change in a distribution position along a phase difference direction, a stability index, variance in time-series information of the phase correlation, the difference between a maximum value and a minimum value, and the like.

Of these, the stability index S is obtained as direction cosine of a vector of a phase correlation $R_{12}(\tau,t)$ at a time t and a vector of a phase correlation $R_{12}(\tau,t-\Delta t)$ at a time $t-\Delta t$ as shown in Expression (1). The stability index represents a greater value as the degree of fluctuation of the phase distribution decreases.

[Equation 1]

$$S(t) = \frac{\sum_{\tau=\tau_{min}}^{\tau_{max}} R_{12}(\tau,t) \cdot R_{12}(\tau,t-\Delta t)}{\sqrt{\sum_{\tau=\tau_{min}}^{\tau_{max}} \left|R_{12}(\tau,t)\right|^2} \sqrt{\sum_{\tau=\tau_{min}}^{\tau_{max}} \left|R_{12}(\tau,t-\Delta t)\right|^2}}$$

$$\dots (1)$$

The driving assistance control unit 23 controls driving assistance based on the degree of fluctuation calculated by the fluctuation degree calculation unit 22. The driving assistance control unit 23 also functions as a surrounding object detection unit which detects a surrounding object based on a degree of temporal fluctuation of the phase information of the sound signals collected by at least two of the two or more sound collection units.

The driving assistance control unit 23 determines the presence of a surrounding object by discriminating sound from a surrounding object, such as a surrounding vehicle, from surrounding noise based on the degree of fluctuation of the phase distribution. When the phase distribution is stable, for example, when the stability index is equal to or greater than a threshold value, the driving assistance control unit 23 determines that a surrounding object is present. When the degree of fluctuation of the phase distribution is not stable, for example, when the stability index is less than the threshold value, driving assistance control unit 23 does not determine that a surrounding object is present.

When it is determined that a surrounding object is present, the driving assistance control unit 23 performs control such that the driving assistance execution unit 12 executes driving assistance. When it is not determined that a surrounding object is present, driving assistance is not executed. The driving assistance control unit 23 may control driving assistance directly based on the degree of fluctuation of the phase distribution without determining the presence of a surrounding object, which becomes a local sound source.

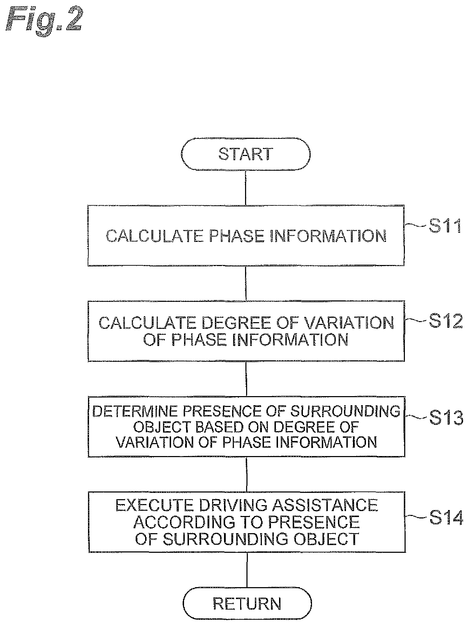

Fig. 2 is a flowchart showing the driving assistance method according to the first embodiment. The driving assistance device repeatedly executes the process shown in Fig. 2 in a set cycle.

As shown in Fig. 2, the phase information calculation unit 21 calculates phase information of sound signals from the outside collected by the microphones 11a and 11b (S11). The phase information calculation unit 21 obtains a phase distribution representing the relationship of the phase difference between the sound signals and the phase correlation between the sound signals in the same phase difference.

The fluctuation degree calculation unit 22 calculates a degree of temporal fluctuation of the phase information calculated by the phase information calculation unit 21 (S12). For example, the fluctuation degree calculation unit 22 calculates a stability index representing a degree of temporal fluctuation of a phase distribution.

The driving assistance control unit 23 determines the presence of a surrounding object based on the degree of fluctuation of the phase distribution (S13). The driving assistance control unit 23 is more likely to determine a presence of a local sound source to be greater as the degree of fluctuation of the phase distribution decreases, or determines that a local sound source is present when an index representing the degree of fluctuation of the phase distribution, for example, a stability index, is equal to or greater than a threshold value.

When it is determined that a surrounding object is present, the driving assistance control unit 23 performs control such that the driving assistance execution unit 12 executes driving assistance (S14). For example, the driving assistance control unit 23 further facilitates driving assistance as the degree of fluctuation of the phase distribution decreases, for example, as the stability index increases. The driving assistance is promoted, for example, by extending a detection range when detecting a surrounding object or increasing detection accuracy, decreasing a detection threshold value to relax an execution condition of assistance, advancing a start timing of assistance, improving the level of assistance content, or the like.

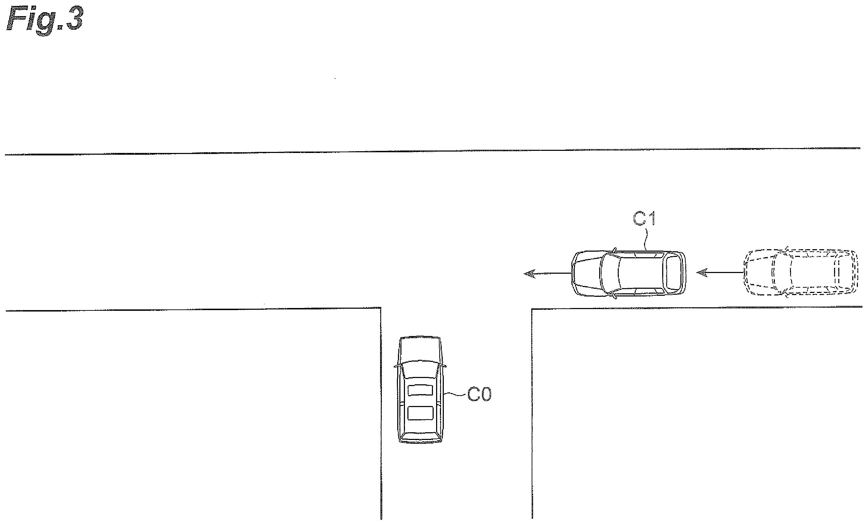

Fig. 3 is a diagram showing an example of a situation in which the driving assistance method according to the first embodiment is applied. As shown in Fig. 3, when a driver of a host vehicle C0 cannot visually recognize a surrounding vehicle C1 on a road with poor visibility, such as an intersection, the surrounding vehicle C1 is detected based on the correlation between sound signals, and driving assistance is performed. In the situation shown in Fig. 3, when the surrounding vehicle C1 is detected, for example, driving assistance, such as alerting the driver, prompting a braking operation, automatic braking, and assistance of a braking force, is performed. The surrounding vehicle C1 seems to be detected based on a significant correlation appearing between the sound signals with excellent accuracy. However, in an actual acoustic environment, for example, traveling sound of the surrounding vehicle C1 is mixed with surrounding noise, a significant correlation between the sound signals does not appear, and the surrounding vehicle C1 may not be detected with excellent accuracy.

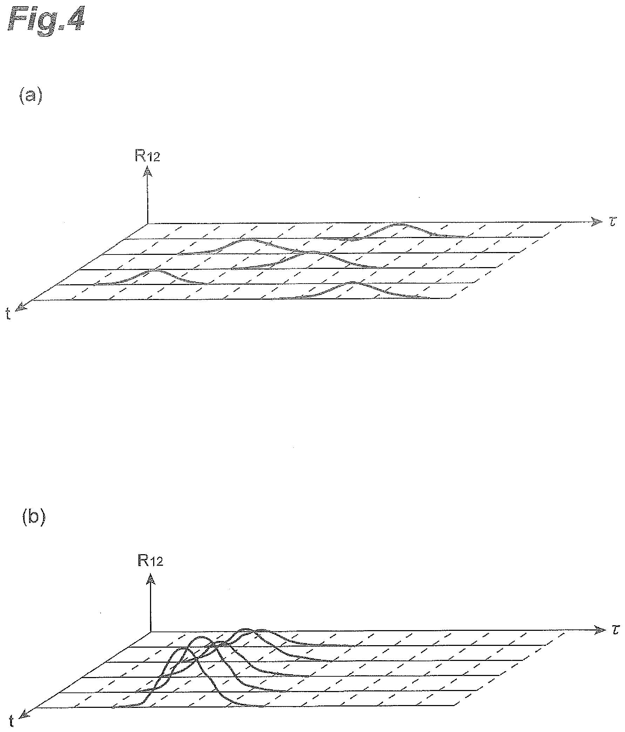

Fig. 4 is a diagram schematically showing a degree of fluctuation of a phase distribution when a surrounding vehicle is far away and when a surrounding vehicle is approaching. The respective axes of Fig. 4 respectively represent a delay quantity $\tau$ corresponding to a phase difference, time t, and a phase correlation $R_{12}$.

When a surrounding vehicle is far away, as shown in Fig. 4(a), a distribution position is changed randomly in the phase difference direction due to surrounding noise, and a peak value is relatively small. This is because power of surrounding noise is changed randomly and a sound source direction is not defined. It is assumed that the peak value includes a substantial peak value approximating the peak value.

When a surrounding vehicle is approaching, as shown in Fig. 4(b), a distribution position is substantially defined in the phase difference direction due to traveling sound of the surrounding vehicle, a peak position is moved in a predetermined direction with time, and a peak value is increased. This is because a surrounding vehicle as a sound source is approaching a host vehicle, and power of traveling sound is increased with time. Though not shown in Fig. 4(b), when a surrounding vehicle is separating from a host vehicle, a peak position is moved in a predetermined direction with time, and a peak value is decreased.

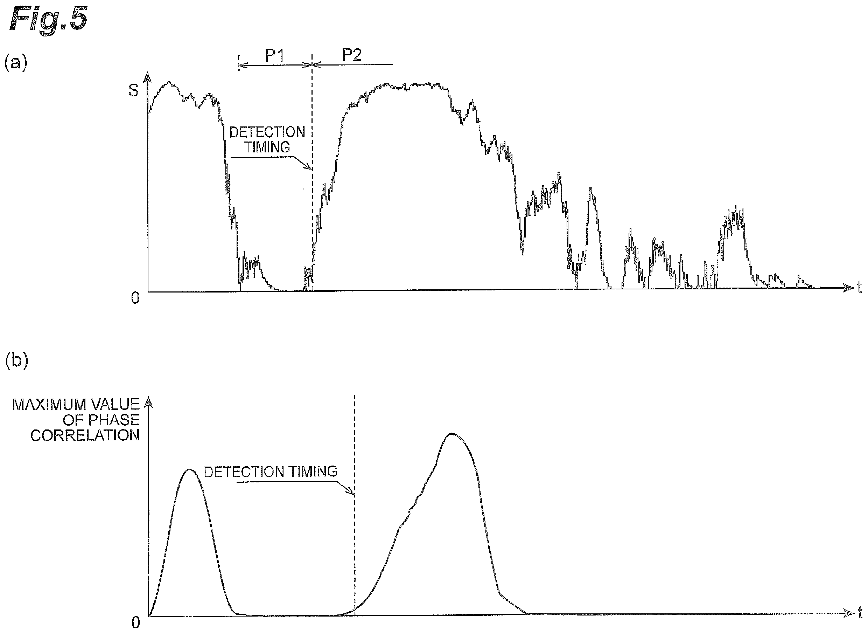

Fig. 5 is a diagram showing a temporal change in a stability index and a temporal change in a degree of correlation between sound signals in contrast. As described above, the stability index is an example of an index representing the degree of temporal fluctuation of the phase distribution. When a surrounding vehicle is far away, as shown in Fig. 4(a), the distribution position of the phase distribution is changed randomly, and the peak value is relatively small. Accordingly, the stability index S represents that the phase distribution is not stable as shown in a first period P1 of Fig. 5(a). When a surrounding vehicle is approaching or moves close, as shown in Fig. 4(b), the distribution position of the phase distribution is substantially defined, the peak position is moved in a predetermine direction with time, and the peak value is increased. Therefore, the stability index S represents that the phase distribution is stable as shown in a second period P2 of Fig. 5(a).

Fig. 5(b) shows a temporal change in the correlation between sound signals, in particular, a temporal change in a maximum value of a phase correlation. Fig. 5 shows a temporal change in a stability index and a temporal change in a maximum value of a phase correlation based on the same time. As shown in Fig. 5, the degree of fluctuation of the phase distribution, for example, the stability index S, exhibits stability at the timing earlier than when a significant correlation appears between the sound signals, that is, when the maximum value of the phase correlation is increased. Figs. 5(a) and 5(b) respectively show the detection timing of a surrounding vehicle based on the stability index S and the detection timing of a surrounding vehicle based on the maximum value of the phase correlation in contrast. As indicated by both detection timings, the characteristic of the degree of fluctuation of the phase distribution is used, whereby it is possible to detect a surrounding vehicle at an early timing with excellent accuracy compared to a case where the correlation characteristic between signals is used.

As described above, according to the first embodiment of the invention, it is possible to perform driving assistance based on the degree of temporal fluctuation of the phase distribution representing the relationship of the phase difference between the sound signals and the phase correlation between the sound signal in the same phase difference even in a situation in which the degree of correlation between the sound signals is not conspicuous. Furthermore, the fluctuation characteristic of the phase distribution is used, whereby it is possible to detect a surrounding vehicle at an early timing with excellent accuracy and perform driving assistance based on the detection result compared to a case where the correlation characteristic between signals is used.

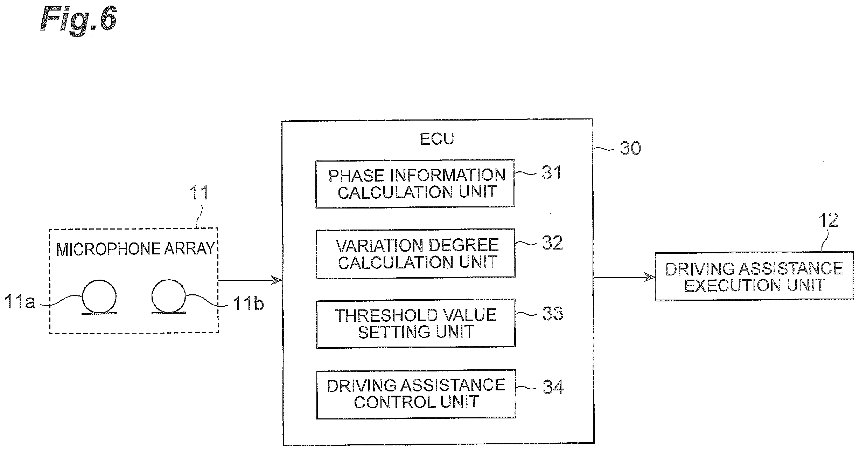

Next, a driving assistance device and method according to a second embodiment of the invention will be described referring to Figs. 6 to 7. The second embodiment is different from the first embodiment in that a threshold value is set to be smaller as a degree of fluctuation of a phase distribution decreases, and it is determined that a surrounding object is present when a peak value of the phase distribution is equal to or greater than the threshold value. Hereinafter, overlapping description with the first embodiment will be omitted.

Fig. 6 is a block diagram showing the driving assistance device according to the second embodiment. As shown in Fig. 6, in the driving assistance device, a threshold value setting unit 33 is further provided in an ECU 30 corresponding to the ECU 20 of the driving assistance device according to the first embodiment. The functions of a microphone array 11, a driving assistance execution unit 12, and a fluctuation degree calculation unit 32 are the same as the corresponding configurations of the driving assistance device according to the first embodiment, and thus, description thereof will not be repeated.

As in the first embodiment, the phase information calculation unit 31 obtains the peak value of the phase distribution together with the phase distribution representing the relationship of the phase difference between the sound signals and the phase correlation between the sound signals in the same phase difference. It is assumed that the peak value includes a substantial peak value approximating the peak value.

The threshold value setting unit 33 sets a threshold value based on the degree of fluctuation calculated by the fluctuation degree calculation unit 32. The threshold value setting unit 33 sets the threshold value to be smaller as the phase distribution becomes more stable. For example, the threshold value setting unit 33 sets the threshold value to be smaller as the stability index increases.

The driving assistance control unit 34 controls driving assistance based on the phase information calculated by the phase information calculation unit 31 and the threshold value set by the threshold value setting unit 33. The driving assistance control unit 34 determines the presence of a surrounding object by discriminating sound from a surrounding object, such as a surrounding vehicle, from surrounding noise based on the phase information and the threshold value. The driving assistance control unit 34 determines the presence of a surrounding object based on the peak value of the phase distribution and the threshold value. The driving assistance control unit 34 determines that a surrounding object is present when the peak value of the phase distribution is equal to or greater than the threshold value, and does not determine that a surrounding object is present when the peak value of the phase distribution is less than the threshold value.

When it is determined that a surrounding object is present, the driving assistance control unit 34 performs control such that the driving assistance execution unit 12 executes driving assistance. When it is not determined that a surrounding object is present, driving assistance is not executed. The driving assistance control unit 34 may control driving assistance directly based on the peak value of the phase distribution and the threshold value without determining the presence of a surrounding object, which becomes a local sound source.

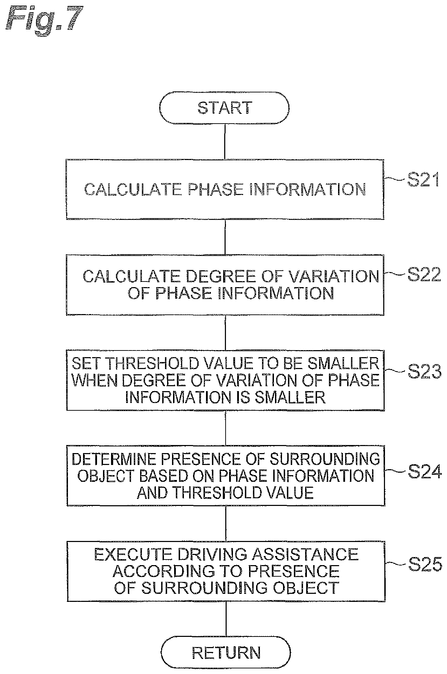

Fig. 7 is a flowchart showing the driving assistance method according to the second embodiment. The driving assistance device repeatedly executes the process shown in Fig. 7 in a set cycle.

As shown in Fig. 7, the phase information calculation unit 31 calculates phase information of sound signals from the outside collected by the microphones 11a and 11b (S21). The phase information calculation unit 31 obtains a phase distribution representing the relationship of the phase difference between the sound signals and the phase correlation between the sound signals in the same phase difference, and a peak value of the phase distribution.

The fluctuation degree calculation unit 32 calculates a degree of temporal fluctuation of the phase information calculated by the phase information calculation unit 21 (S22). For example, the fluctuation degree calculation unit 32 calculates a stability index representing a degree of temporal fluctuation of the phase distribution.

The threshold value setting unit 33 sets a threshold value to be smaller as the degree of fluctuation calculated by the fluctuation degree calculation unit 32 decreases (S23). For example, the threshold value setting unit 33 sets the threshold value to be smaller as the stability index increases.

The driving assistance control unit 34 determines the presence of a surrounding object based on the phase information and the threshold value (S24). The driving assistance control unit 34 is more likely to determine a presence of a local sound source to be greater as the degree of fluctuation of the phase distribution decreases, or determines that a local sound source is present when the peak value of the phase distribution is equal to or greater than the threshold value set based on an index representing the degree of fluctuation of the phase distribution.

When it is determined that a surrounding object is present, the driving assistance control unit 34 performs control such that the driving assistance execution unit 12 executes driving assistance (S25). The driving assistance control unit 34 further facilitates driving assistance as the degree of fluctuation of the phase distribution decreases. In general, a trend is observed that the peak value of the phase distribution becomes greater as the degree of fluctuation of the phase distribution decreases. Therefore, when it is more likely to be determined that a local sound source is present, driving assistance is more likely to be executed.

As described above, according to the second embodiment of the invention, the threshold value is set to be smaller as the degree of fluctuation of the phase distribution decreases, and when the peak value of the phase distribution is equal to or greater than the threshold value, it is determined that a surrounding object is present, whereby it is possible to increase detection sensitivity for a surrounding object. With this, it is possible to advance the detection timing of a surrounding object.

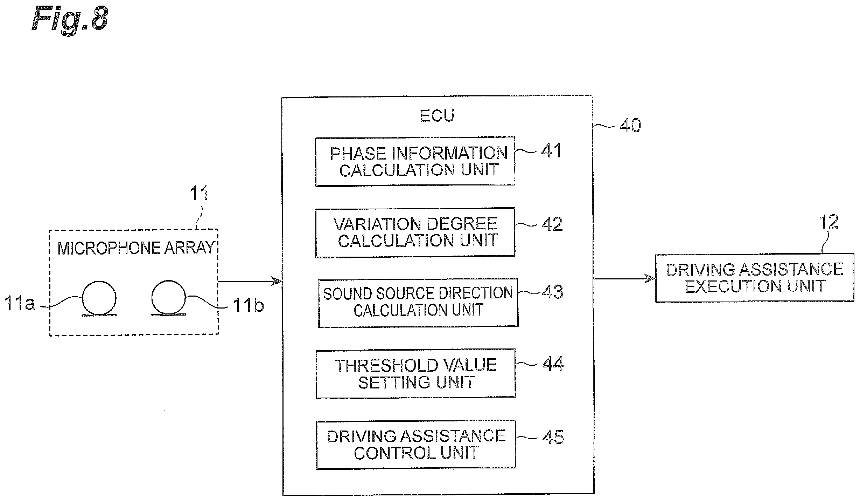

Next, a driving assistance device and method according to a third embodiment of the invention will be described referring to Figs. 8 to 12. The third embodiment is different from the second embodiment in that a threshold value is set to be smaller as a degree of fluctuation of a phase distribution decreases and a specific phase difference corresponding to a peak of a phase correlation increases, and when a peak value of the phase distribution is equal to or greater than the threshold value, it is determined that a surrounding object is present. Hereinafter, overlapping description with the second embodiment will be omitted.

Fig. 8 is a block diagram showing the driving assistance device according to the third embodiment. As shown in Fig. 8, in the driving assistance device, a sound source direction calculation unit 43 is further provided in an ECU 40 corresponding to the ECU 20 of the driving assistance device according to the second embodiment. The functions of a microphone array 11, a driving assistance execution unit 12, a phase information calculation unit 41, a fluctuation degree calculation unit 42, and a driving assistance control unit 45 are the same as the corresponding configurations of the driving assistance device according to the second embodiment, and thus, description thereof will not be repeated.

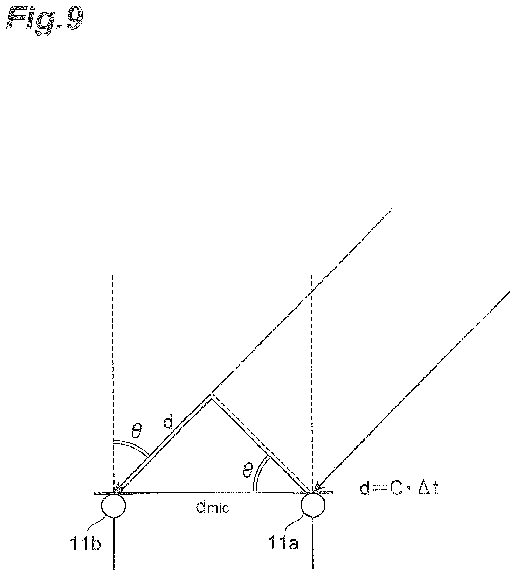

The sound source direction calculation unit 43 calculates a sound source direction based on phase information calculated by the phase information calculation unit 41. The sound source direction calculation unit 43 calculates the sound source direction based on a phase difference corresponding to the peak of the phase distribution. As shown in Fig. 9, a sound source direction θ is calculated with reference to a front direction of a vehicle using Expressions (2) and (3). In Expressions, τ' is a phase difference (delay quantity) corresponding to a peak of a phase distribution, f is a sampling frequency of a sound signal, c is a sound speed, Δt is an arrival time difference of a sound signal between the microphones 11a and 11b, d is an arrival distance difference of a sound signal between the microphones 11a and 11b, and dmic is the interval between the microphones 11a and 11b.

$$\Delta t = \tau' / f \dots (2)$$

$$\theta = \sin^{-1}(c \cdot \Delta t / \text{dmic}) \dots (3)$$

The threshold value setting unit 44 sets a threshold value based on the degree of fluctuation calculated by the fluctuation degree calculation unit 42 and the sound source direction calculated by the sound source direction calculation unit 43. The threshold value setting unit 44 sets the threshold value to be smaller as the phase distribution becomes more stable and the sound source direction becomes further biased to a side with respect to the vehicle. For example, the threshold value setting unit 44 sets the threshold value to be smaller as a stability index increases and the absolute value of the sound source direction increases.

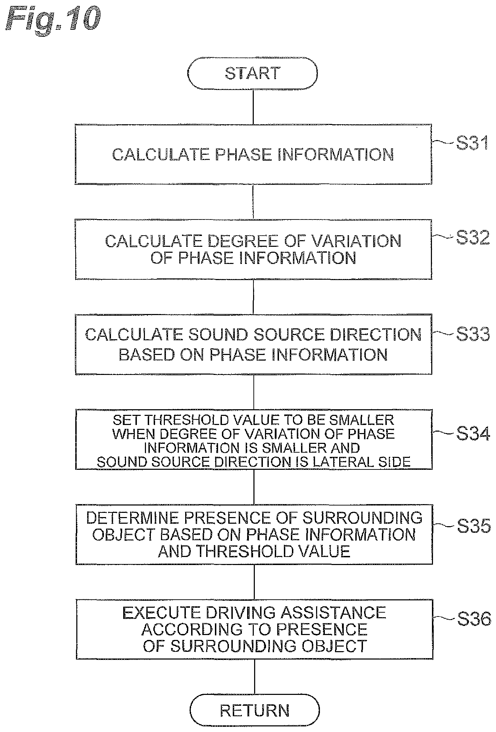

Fig. 10 is a flowchart showing the driving assistance method according to the third embodiment. The driving assistance device repeatedly executes the process shown in Fig. 10 in a set cycle.

As shown in Fig. 10, the phase information calculation unit 41 calculates phase information of sound signals from the outside collected by the microphones 11a and 11b (S31). The phase information calculation unit 41 calculates a phase distribution representing the relationship of the phase difference between the sound signals and the phase correlation between the sound signals in the same phase difference, and a peak value of the phase distribution. It is assumed that the peak value includes a substantial peak value approximating the peak value.

The fluctuation degree calculation unit 42 calculates a degree of temporal fluctuation of the phase information calculated by the phase information calculation unit 41 (S32). For example, the fluctuation degree calculation unit 42 calculates a stability index representing the degree of temporal fluctuation of the phase distribution.

The sound source direction calculation unit 43 calculates a sound source direction based on the phase information calculated by the phase information calculation unit 41 (S33). The sound source direction calculation unit 43 calculates the sound source direction based on a phase difference corresponding to the peak of the phase distribution.

The threshold value setting unit 44 sets a threshold value to be smaller as the degree of fluctuation calculated by the fluctuation degree calculation unit 42 decreases and the sound source direction calculated by the sound source direction calculation unit 43 becomes further biased to a side (S34). For example, the threshold value setting unit 44 sets the threshold value to be smaller as the stability index increases and the absolute value of the sound source direction increases.

The driving assistance control unit 45 determines the presence of a surrounding object based on the phase information and the threshold value (S35). The driving assistance control unit 45 is more likely to determine a presence of a local sound source to be greater as the degree of fluctuation of the phase distribution decreases, or determines that a local sound source is present when the peak value of the phase distribution is equal to or greater than the threshold value set based on an index representing the degree of fluctuation of the phase distribution and the sound source direction.

The driving assistance control unit 45 is more likely to determine the presence of a local sound source to be greater as a degree of fluctuation of a specific phase difference, that is, a degree of fluctuation of the sound source direction, decreases. The driving assistance control unit 45 is more likely to determine the presence of the local sound source to be greater as the sound source direction becomes further biased to the side from a reference direction corresponding to the sound collection direction of the microphone array 11, that is, the front direction of the vehicle. In order to increase detection sensitivity of the local sound source, the directional characteristic of the microphone array 11 may be set to a direction deviated from the front direction.

When it is determined that a surrounding object is present, the driving assistance control unit 45 performs control such that the driving assistance execution unit 12 executes driving assistance (S36). The driving assistance control unit 45 further facilitates driving assistance as the degree of fluctuation of the phase distribution decreases. In general, a trend is observed that the peak value of the phase distribution becomes greater as the degree of fluctuation of the phase distribution decreases. Therefore, when it is more likely to be determined that a local sound source is present, driving assistance is more likely to be executed.

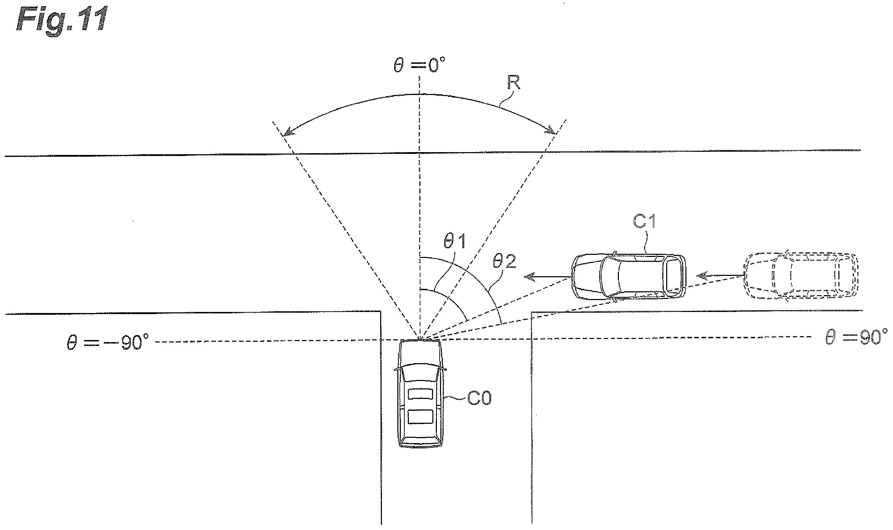

Fig. 11 is a diagram showing an example of a situation in which the driving assistance method according to the third embodiment is applied. As shown in Fig. 11, in an actual acoustic environment at an intersection, when a host vehicle C0 is positioned in front of the intersection, it is confirmed that surrounding noise and traveling sound of a surrounding vehicle C1 crossing in front of the host vehicle C0 exhibit the following characteristics. In Fig. 11, a sound source direction $\theta$ is set such that the front of the host vehicle C0 is 0°, and the right and left sides are 90° and -90°, respectively.

The phase distribution of surrounding noise is not stable, and the sound source direction $\theta$ is changed to the right and left within a narrow range R in front of the host vehicle C0. The phase distribution of traveling sound of the surrounding vehicle C1, which is approaching, is stable, and for example, like $\theta1$ and $\theta2$ in the drawing, the sound source direction θ is biased to the side of the host vehicle C0. That is, when the phase distribution is stable and the sound source direction θ is biased to the side of the host vehicle C0, there is a high possibility that a sound source is the surrounding vehicle C1, which is approaching the host vehicle C0.

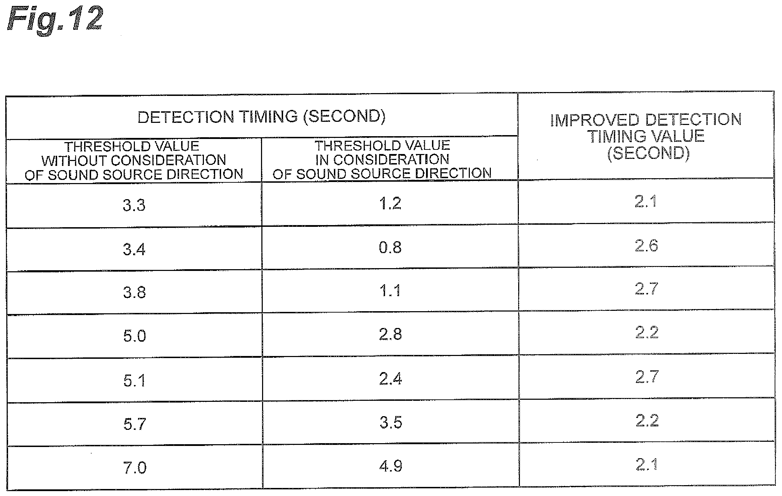

With the use of the above-described characteristics, the threshold value is set to be smaller as the degree of fluctuation of the phase distribution decreases and the sound source direction becomes further biased to the side, whereby detection sensitivity for a surrounding vehicle is increased. Fig. 12 shows an experimental result of the detection timings of a surrounding vehicle when the threshold value is set in consideration of the sound source direction and when the threshold value is set without consideration of the sound source direction. As shown in Fig. 12, it is confirmed that the detection timing of a surrounding vehicle is advanced by about two seconds when the sound source direction is considered compared to when the sound source direction is not considered.

As described above, according to the third embodiment of the invention, the threshold value is set to be smaller as the degree of fluctuation of the phase distribution decreases and the specific phase difference corresponding to the peak of the phase correlation increases, and when the peak value of the phase distribution is equal to or greater than the threshold value, it is determined that a surrounding object is present, whereby it is possible to further increase detection sensitivity for a surrounding object. With this, it is possible to further advance the detection timing of a surrounding object.

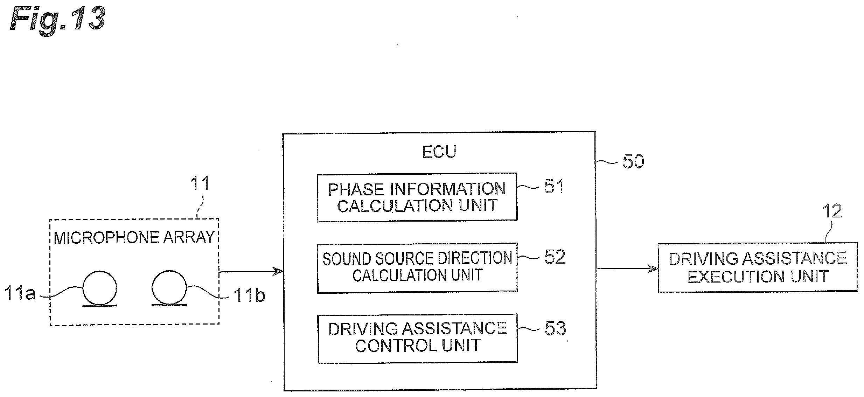

Next, a driving assistance device and method according to a fourth embodiment of the invention will be described referring to Figs. 13 to 17. The driving assistance device and method according to the fourth embodiment performs driving assistance of a vehicle based on a degree of temporal fluctuation of a specific phase difference corresponding to a peak of the phase correlation between sound signals collected by at least two of two or more sound collection units, that is, a degree of temporal fluctuation of a sound source direction. In the driving assistance, the approach or separation of a surrounding object is determined based on the degree of fluctuation of the sound source direction.

Fig. 13 is a block diagram showing the driving assistance device according to the fourth embodiment. As shown in Fig. 13, the driving assistance device is mounted in a vehicle, and is constituted focusing on an electronic control unit 50 (hereinafter, abbreviated as an ECU 50) which performs the driving assistance of the vehicle.

A microphone array 11 is connected to the ECU 50. The microphone array 11 constitutes two or more sound collection units disposed apart from one another. The microphone array 11 is constituted by, for example, one or more microphones 11 a and 11b disposed on each of the right and left sides of the front surface of the vehicle.

Sound signals from the outside collected by the microphones 11a and 11b are input to the ECU 50. The sound signals are processed by, for example, a microphone amplifier, a band-pass filter, an A/D converter, and the like and are input. Hereinafter, description will be provided assuming a case where a first sound signal collected and processed by the microphone 11 a and a second sound signal collected and processed by the microphone 11b are input.

A driving assistance execution unit 12 is connected to the ECU 40. The driving assistance execution unit 12 includes human-machine interfaces (hereinafter, abbreviated as HMIs) and actuators.

As the HMIs, for example, a monitor, a speaker, a vibrator, and the like are used. The HMIs are used to perform notification assistance to the driver of the vehicle using visual information, auditory information, and tactile information. As the actuators, a brake actuator, a steering actuator, a seatbelt actuator, and the like are used. The actuators control a brake device, a steering device, and a seatbelt device, and are used to perform driving assistance for avoiding collision with a surrounding object and driving assistance for stabilizing vehicle behavior.

The notification assistance includes alerting the driver and prompting the driver to execute a predetermined driving operation. The collision avoidance includes collision avoidance by a braking intervention and collision avoidance by a steering intervention. The braking intervention includes, for example, automatic braking and assistance of a braking force, and the steering intervention includes automatic steering and assistance of steering.

The ECU 50 includes a phase information calculation unit 51, a sound source direction calculation unit 52, and a driving assistance control unit 53. The ECU 50 is primarily constituted by a CPU, a ROM, a RAM, and the like, and implements the functions of the phase information calculation unit 51, the sound source direction calculation unit 52, and the driving assistance control unit 53 through the execution of a program on the CPU. The functions of the phase information calculation unit 51, the sound source direction calculation unit 52, and the driving assistance control unit 53 may be implemented by two or more ECUs.

The phase information calculation unit 51 calculates phase information of sound signals from the outside collected by the microphones 11a and 11b. The phase information calculation unit 51 calculates a specific phase difference corresponding to a peak of the phase correlation between sound signals collected by at least two of two or more sound collection units. The specific phase difference is calculated by collecting the first sound signal using one sound collection unit, collecting the second sound signal using the other sound collection unit, delaying the second sound signal with a plurality of delay quantities, and obtaining a phase distribution representing the phase correlation between the first sound signal and the second sound signal delayed with each delay quantity.

A plurality of delay quantities are set as, for example, a delay quantity $\tau = \tau min, ..., -2, -1, 0, 1, 2, ...,$ and $\tau max$ (tap). For example, the phase correlation is obtained as a general cross-correlation coefficient (GCC-PHAT) in order to calculate a cross-correlation function only with a phase component by whitening target sound.

The sound source direction calculation unit 52 calculates a sound source direction based on the phase information calculated by the phase information calculation unit 51, and calculates a degree of fluctuation of the sound source direction. The degree of fluctuation of the sound source direction means a degree of temporal fluctuation of the sound source direction, and also means temporal variance of the sound source direction. The sound source direction calculation unit 52 calculates the sound source direction based on the phase difference corresponding to the peak of the phase correlation. That is, the sound source direction corresponds to a specific phase difference corresponding to a peak of the phase correlation between sound signals collected by at least two of two or more sound collection units.

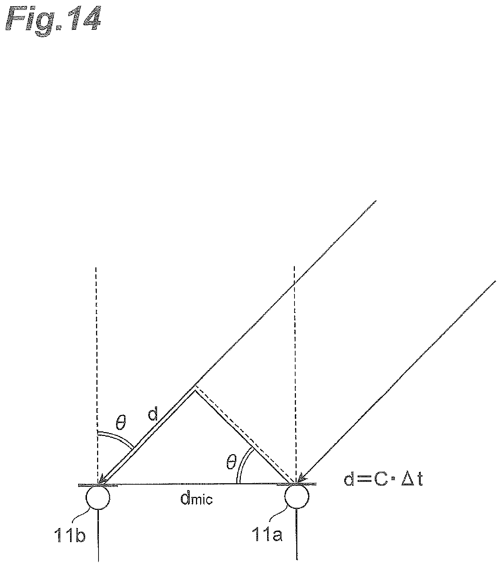

As shown in Fig. 14, a sound source direction θ is calculated using Expressions (4) and (5). In Expressions, τ' is a phase difference (delay quantity) corresponding to a peak of a phase correlation, f is a sampling frequency of a sound signal, c is a sound speed, Δt is an arrival time difference of a sound signal between the microphones 11a and 11b, d is an arrival distance difference of a sound signal between the microphones 11a and 11b, and dmic is the interval between the microphones 11a and 11b.

$$\Delta t = \tau' / f \ldots (4)$$

$$\theta = \sin^{-1}(c \cdot \Delta t / dmic) \ldots (5)$$

The driving assistance control unit 53 controls driving assistance based on the degree of fluctuation of the sound source direction calculated by the sound source direction calculation unit 52. The driving assistance control unit 53 also functions as a surrounding object detection unit which detects a surrounding object based on a degree of temporal fluctuation of the phase information of the sound signals collected by at least two of the two or more sound collection units. In particular, the driving assistance control unit 53 detects a surrounding object which is approaching or separating from the vehicle.

The driving assistance control unit 53 determines the approach or separation of a surrounding object based on the degree of fluctuation of the sound source direction. For example, the driving assistance control unit 53 determines that a surrounding object approaches or separates when the degree of fluctuation of the sound source direction is less than a threshold value. The driving assistance control unit 53 does not determine that a surrounding object approaches or separates when the degree of fluctuation of the sound source direction is equal to or greater than the threshold value.

The driving assistance control unit 53 may determine the approach or separation of a surrounding object based on an overall fluctuation trend of the sound source direction calculated by the sound source direction calculation unit 52. The driving assistance control unit 53 may determine the approach or separation of a surrounding object based on the degree of correlation between the sound signals collected by the microphones 11a and 11b, for example, a correlation of time-series information of a power spectrum or a sound pressure.

For example, when it is determined that a surrounding object approaches, the driving assistance control unit 53 performs control such that the driving assistance execution unit 12 executes driving assistance. When it is not determined that a surrounding object approaches, driving assistance is not executed. The driving assistance control unit 53 may perform driving assistance directly based on the degree of fluctuation of the sound source direction without determining the approach or separation of a surrounding object, which becomes a local sound source.

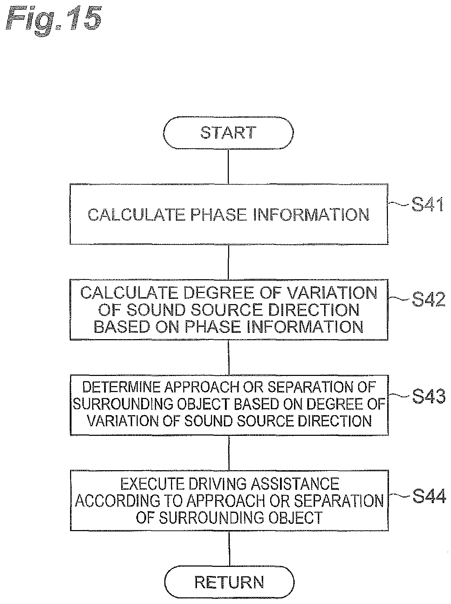

Fig. 15 is a flowchart showing the driving assistance method according to the fourth embodiment. The driving assistance device repeatedly executes the process shown in Fig. 15 in a set cycle.

As shown in Fig. 15, the phase information calculation unit 51 calculates phase information of sound signals from the outside collected by the microphones 11a and 11b (S41). The phase information calculation unit 51 calculates a specific phase difference corresponding to a peak of the phase correlation between the sound signals collected by the microphones 11a and 11b.

The sound source direction calculation unit 52 calculates a sound source direction based on the phase information calculated by the phase information calculation unit 51, and calculates a degree of fluctuation of the sound source direction (S42). The sound source direction calculation unit 52 obtains temporal change in the sound source direction, variance of the sound source direction, or the like.

The driving assistance control unit 53 determines the approach or separation of a surrounding object based on the degree of fluctuation of the sound source direction (S43). For example, the driving assistance control unit 53 determines that a surrounding object approaches or separates when the degree of fluctuation of the sound source direction is less than a threshold value. The driving assistance control unit 53 is more likely to determine a local sound source to be closer as a degree of fluctuation of a specific phase difference, that is, the degree of fluctuation of the sound source direction, decreases, or the degree of fluctuation of the sound source direction becomes small with time.

For example, when it is determined that a surrounding object approaches, the driving assistance control unit 53 performs control such that the driving assistance execution unit 12 executes driving assistance (S44). The driving assistance control unit 53 further facilitates driving assistance as the degree of fluctuation of the specific phase difference, that is, the degree of fluctuation of the sound source direction, decreases. The driving assistance is promoted, for example, by extending a detection range when detecting a surrounding object or increasing detection accuracy, decreasing a detection threshold value to relax an execution condition of assistance, advancing a start timing of assistance, improving the level of assistance content, or the like.

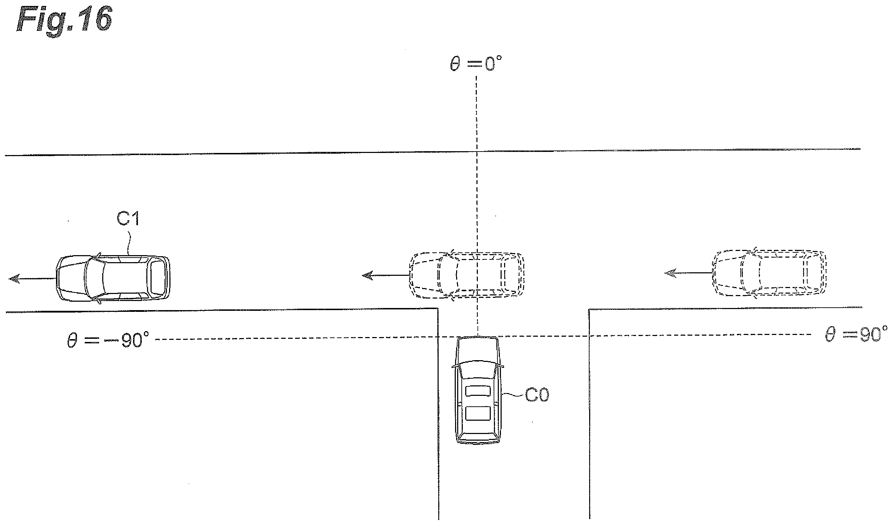

Fig. 16 is a diagram showing an example of a situation in which the driving assistance method according to the fourth embodiment is applied. As shown in Fig. 16, when a driver of a host vehicle C0 cannot visually recognize a surrounding vehicle C1 on a road with poor visibility, such as an intersection, the approach or separation of the surrounding vehicle C1 is determined based on the correlation between sound signals, and driving assistance is performed. In this situation, the approach or separation of the surrounding vehicle C1 seems to be determined based on a significant correlation between sound signals with excellent accuracy. However, in an actual acoustic environment, for example, traveling sound of the surrounding vehicle C1 is mixed with surrounding noise, a significant correlation does not appear between sound signals, and it may not be possible to determine the approach or separation of the surrounding vehicle C1 with excellent accuracy.

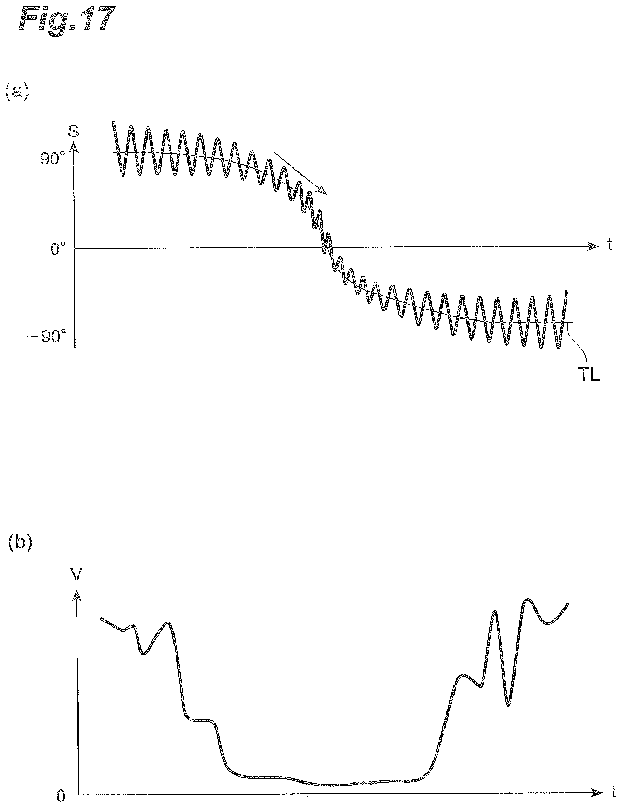

Fig. 17 is a schematic view showing an example of temporal changes in a sound source direction and variance in connection with Fig. 16. A sound source direction is set such that the front of the host vehicle is 0°, the left side is -90°, and the right side is 90°.

As shown in Fig. 17, a sound source direction $\theta$ fluctuates greatly from 90° to 0° when the approaching vehicle C1 approaches the front of the host vehicle C0 from the right side, and from 0° to -90° when the approaching vehicle C1 separates from the front to the left side. An overall fluctuation trend (the absolute value of the gradient of a tangent to a trend line TL) of the sound source direction $\theta$ becomes great when the approaching vehicle C1 approaches the front of the host vehicle C0, and becomes small when the approaching vehicle C1 separates from the front.

In contrast, the degree of fluctuation of the sound source direction 0, that is, a degree of fluctuation of a short cycle component fluctuating vertically little by little, becomes smaller as the approaching vehicle C1 becomes closer to the front of the host vehicle C0, and becomes greater as the approaching vehicle C1 separates farther from the front. Furthermore, the variance V of the sound source direction 0 decreases as the approaching vehicle C1 becomes closer to the front of the host vehicle C0, and becomes greater as the approaching vehicle C1 separates farther from the front. This is because the sound source direction is defined as constant due to the presence of a specific sound source, such as the surrounding vehicle C1, in an acoustic environment in which there is surrounding noise.

With the use of the fluctuation characteristics of the sound source direction described above, when the degree of fluctuation of the sound source direction is smaller than a threshold value, the approach or separation of a surrounding vehicle is determined, and driving assistance can be performed based on the determination result. The approach or separation of a surrounding vehicle may be determined in consideration of the overall fluctuation trend of the sound source direction.

The fluctuation characteristics of the sound source direction described above are not greatly affected by the magnitude of a sound pressure of a sound signal. For this reason, the fluctuation characteristics of the sound source direction described above can be effectively used even when a change in a sound pressure cannot be appropriately detected by the microphone array 11.

That is, even in a situation in which a change in a sound pressure can be hardly detected by the microphone array 11 because a sound pressure of surrounding sound is too great, it is possible to determine whether a surrounding vehicle is approaching or is separating using the fluctuation characteristics of the sound source direction. When it is not possible to determine the approach or separation of a surrounding vehicle even using the same characteristics, for example, a notification that surrounding noise is too great and it is not possible to determine the approach or separation of an approaching vehicle may be given, thereby alerting the driver of the vehicle.

As described above, according to the fourth embodiment of the invention, it is possible to perform driving assistance based on the degree of temporal fluctuation of the specific phase difference corresponding to the peak of the phase correlation between the sound signals, that is, the degree of temporal fluctuation of the sound source direction, even in a situation in which the degree of correlation between the sound signals is not conspicuous. Furthermore, it is possible to determine the approach or separation of a surrounding object based on the degree of fluctuation of the sound source direction.

In the above description, a case where the approach or separation of a surrounding object is determined based on the degree of fluctuation of the sound source direction has been described. Instead of this or in addition to this, the approach or separation of a surrounding vehicle may be determined based on a degree of fluctuation of a frequency.

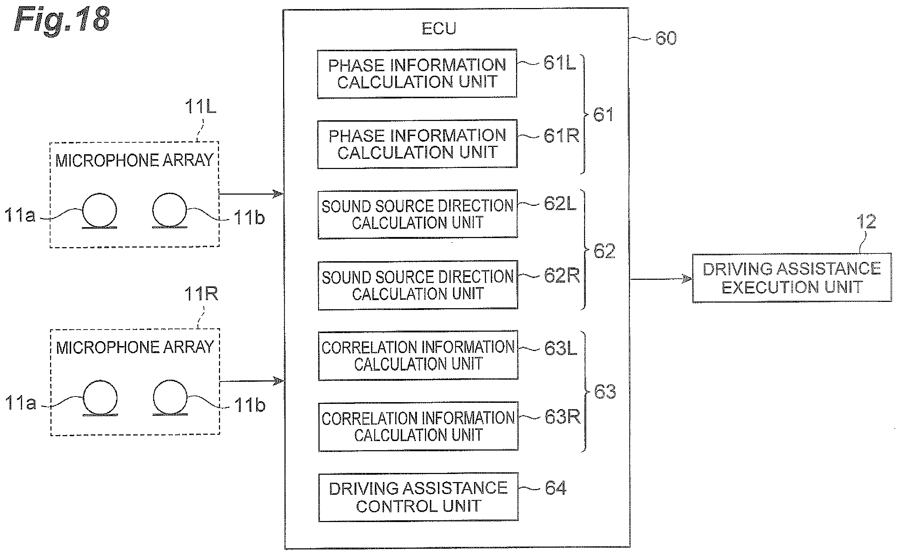

Next, a driving assistance device and method according to a fifth embodiment of the invention will be described referring to Figs. 18 to 22. The driving assistance device and method according to the fifth embodiment performs driving assistance of a vehicle based on a degree of temporal fluctuation of a specific phase difference corresponding to a peak of the phase correlation between sound signals collected by at least two of two or more sound collection units, that is, a degree of temporal fluctuation of a sound source direction, and a degree of correlation between sound signals. In the driving assistance, the approach or separation of a surrounding object is determined based on the degree of fluctuation of the sound source direction and the correlation between the sound signals.

Fig. 18 is a block diagram showing the driving assistance device according to the fifth embodiment. As shown in Fig. 18, the driving assistance device is mounted in a vehicle, and is constituted focusing on an electronic control unit 60 (hereinafter, abbreviated as an ECU 60) which performs the driving assistance of the vehicle.

Microphone arrays 11L and 11R are connected to the ECU 60. The microphone arrays 11L and 11R respectively constitute two or more sound collection units disposed apart from one another. The microphone array 11L of the left channel is constituted by microphones 11 a and 11b disposed apart from each other on the left side of the front surface of the vehicle. Similarly, the microphone array 11R of the right channel is constituted by microphones 11a and 11b disposed apart from each other on the right side of the front surface of the vehicle.

Sound signals from the outside collected by the microphones 11a and 11b are input to the ECU 60. The sound signals of each of the right and left channels are processed by, for example, a microphone amplifier, a band-pass filter, an A/D converter, and the like and are input. Hereinafter, description will be provided assuming a case where each of the microphone arrays 11L and 11R is constituted by the microphones 11a and 11b, and a first sound signal collected and processed by the microphone 11a and a second sound signal collected and processed by the microphone 11b are input.

A driving assistance execution unit 12 is connected to the ECU 60. The driving assistance execution unit 12 includes human-machine interfaces (hereinafter, abbreviated as HMIs) and actuators.

As the HMIs, for example, a monitor, a speaker, a vibrator, and the like are used. The HMIs are used to perform notification assistance to the driver of the vehicle using visual information, auditory information, and tactile information. As the actuators, a brake actuator, a steering actuator, a seatbelt actuator, and the like are used. The actuators control a brake device, a steering device, and a seatbelt device, and are used to perform driving assistance for avoiding collision with a surrounding object and driving assistance for stabilizing vehicle behavior.

The notification assistance includes alerting the driver and prompting the driver to execute a predetermined driving operation. The collision avoidance includes collision avoidance by a braking intervention and collision avoidance by a steering intervention. The braking intervention includes, for example, automatic braking and assistance of a braking force, and the steering intervention includes automatic steering and assistance of steering.

The ECU 60 includes a phase information calculation unit 61, a sound source direction calculation unit 62, a correlation information calculation unit 63, and a driving assistance control unit 64. The phase information calculation unit 61, the sound source direction calculation unit 62, and the correlation information calculation unit 63 are provided as two sets of phase information calculation units 61R and 61L, sound source direction calculation units 62R and 62L, and correlation information calculation units 63R and 63L so as to correspond to the right and left channels.

The ECU 60 is primarily constituted by a CPU, a ROM, a RAM, and the like, and implements the functions of the phase information calculation unit 61, the sound source direction calculation unit 62, the correlation information calculation unit 63, and the driving assistance control unit 64 through the execution of a program on the CPU. The functions of the phase information calculation unit 61, the sound source direction calculation unit 62, the correlation information calculation unit 63, and the driving assistance control unit 64 may be implemented by two or more ECUs.

The phase information calculation unit 61 calculates phase information of sound signals from the outside collected by the microphones 11a and 11b constituting each of the microphone arrays 11L and 11R. The phase information calculation unit 61 calculates a specific phase difference corresponding to a peak of the phase correlation between sound signals collected by at least two of two or more sound collection units. The specific phase difference is calculated by collecting the first sound signal using one sound collection unit, collecting the second sound signal using the other sound collection unit, delaying the second sound signal with a plurality of delay quantities, and obtaining a phase distribution representing the phase correlation between the first sound signal and the second sound signal delayed with each delay quantity.

A plurality of delay quantities are set as, for example, a delay quantity $\tau = \tau min, ..., -2, -1, 0, 1, 2, ...,$ and $\tau max$ (tap). For example, the phase correlation is obtained as a general cross-correlation coefficient (GCC-PHAT) in order to calculate a cross-correlation function only with a phase component by whitening target sound.

The sound source direction calculation unit 62 calculates a sound source direction based on the phase information calculated by the phase information calculation unit 61, and calculates a degree of temporal fluctuation of the sound source direction. The sound source direction calculation unit 62 calculates the sound source direction based on the phase difference corresponding to the peak of the phase correlation. That is, the sound source direction corresponds to the specific phase difference corresponding to the peak of the phase correlation between the sound signals collected by at least two of the two or more sound collection units.

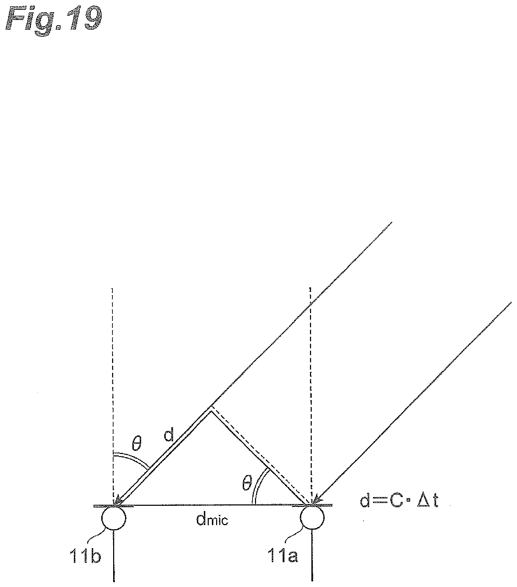

As shown in Fig. 19, a sound source direction 0 is calculated using Expressions (6) and (7). In Expressions, $\tau'$ is a phase difference (delay quantity) corresponding to a peak of a phase correlation, f is a sampling frequency of a sound signal, c is a sound speed, Δt is an arrival time difference of a sound signal between the microphones 11a and 11b, d is an arrival distance difference of a sound signal between the microphones 11 a and 11b, and dmic is the interval between the microphones 11a and 11b.

$$\Delta t = \tau' / f \dots (6)$$

$$\theta = \sin^{-1}(c \cdot \Delta t / dmic) \dots (7)$$

The correlation information calculation unit 63 calculates correlation information of the sound signals from the outside collected by the microphones 11a and 11b constituting each of the microphone arrays 11L and 11R. The correlation information calculation unit 63 calculates a correlation value representing the degree of correlation of the first sound signal and the second sound signal, for example, a degree of correlation of time-series information of a power spectrum or a sound pressure.

The driving assistance control unit 64 controls driving assistance based on the sound source direction calculated by the sound source direction calculation unit 62 and the correlation information calculated by the correlation information calculation unit 63. The driving assistance control unit 64 also functions as a surrounding object detection unit which detects a surrounding object based on a degree of temporal fluctuation of the phase information of the sound signals collected by at least two of the two or more sound collection units. In particular, the driving assistance control unit 64 detects a surrounding object which is approaching or separating from the vehicle.

The driving assistance control unit 64 determines the approach or separation of a surrounding object based on the sound source direction and the degree of fluctuation of the correlation information. For example, when it is determined that a surrounding object approaches, the driving assistance control unit 64 performs control such that the driving assistance execution unit 12 executes driving assistance. When it is not determined that a surrounding object approaches, driving assistance is not executed. The driving assistance control unit 64 may control driving assistance directly based on the sound source direction and the degree of fluctuation of the correlation information without determining the approach or separation of a surrounding object, which becomes a local sound source.

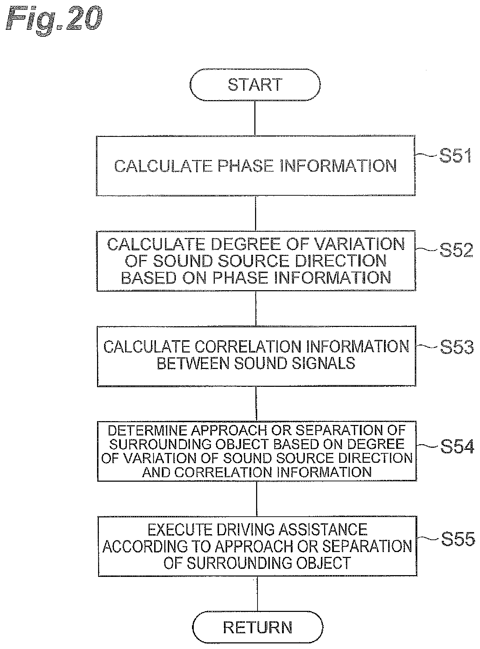

Fig. 20 is a flowchart showing the driving assistance method according to the fifth embodiment. The driving assistance device repeatedly executes the process shown in Fig. 20 in a set cycle.

As shown in Fig. 20, the phase information calculation unit 51 calculates phase information of sound signals from the outside collected by the microphones 11a and 11b for each of the right and left channels (S51). The phase information calculation unit 61 calculates a specific phase difference corresponding to a peak of the phase correlation between the sound signals collected by the microphones 11 a and 11b for each channel.

The sound source direction calculation unit 62 calculates a sound source direction based on the phase information calculated by the phase information calculation unit 61 for each channel, and calculates a degree of fluctuation of the sound source direction for each channel (S52).

The correlation information calculation unit 63 calculates correlation information of the sound signals from the outside collected by the microphones 11a and 11b for each of the right and left channels (S53). The correlation information calculation unit 63 calculates a correlation value representing the degree of correlation of the first sound signal and the second sound signal for each channel.

The driving assistance control unit 64 determines the approach or separation of a surrounding object based on the sound source direction and the degree of fluctuation of the correlation information (S54). The driving assistance control unit 64 determines the approach or separation of a surrounding object based on the sound source direction calculated by the sound source direction calculation unit 62 and the correlation information calculated by the correlation information calculation unit 63. The driving assistance control unit 64 determines the approach or separation of a surrounding object based on the sound source direction and the fluctuation trend of the correlation value.

The driving assistance control unit 64 determines whether or not an approach condition is established based on the fluctuation trend of the sound source direction of one channel. The approach condition is established when the absolute value of the sound source direction is less than a first threshold value, and is less than a second threshold value smaller than the first threshold value within a predetermined time after being less than the first threshold value.

If the approach condition is established, the driving assistance control unit 64 determines whether or not a separation condition is established based on the sound source direction and the fluctuation trend of the correlation value for the other channel. The separation condition is established when the absolute value of the gradient of the sound source direction is less than a third threshold value and is equal to or greater than a fourth threshold value after being less than the third threshold value and the absolute value of the sound source direction is equal to or greater than a fifth threshold value, and thereafter, the gradient of the correlation value is equal to or greater than a sixth threshold value.

That is, the driving assistance control unit 64 is more likely to determine a local sound source to separate farther as a degree of fluctuation of a specific phase difference, that is, a degree of fluctuation of the sound source direction, becomes greater, or when the degree of fluctuation of the specific phase difference becomes great with time.

When it is determined that a surrounding object approaches, the driving assistance control unit 64 performs control such that the driving assistance execution unit 12 executes driving assistance (S55). The driving assistance control unit 64 further facilitates driving assistance as the degree of fluctuation of the specific phase difference, that is, the degree of fluctuation of the sound source direction, decreases. The driving assistance is promoted, for example, by extending a detection range when detecting a surrounding object or increasing detection accuracy, decreasing a detection threshold value to relax an execution condition of assistance, advancing a start timing of assistance, improving the level of assistance content, or the like.

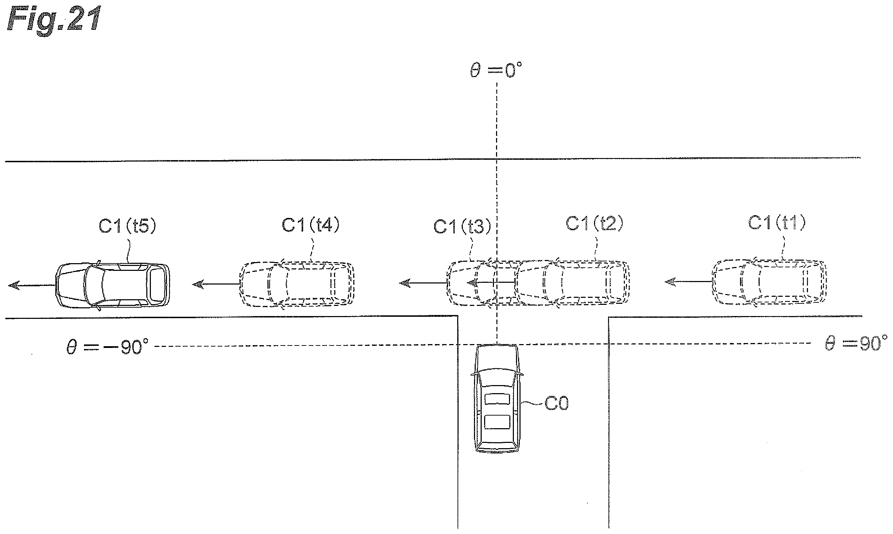

Fig. 21 is a diagram showing an example of a situation in which the driving assistance method according to the fifth embodiment is applied. As shown in Fig. 21, when a driver of a host vehicle C0 cannot visually recognize a surrounding vehicle C1 on a road with poor visibility, such as an intersection, the approach or separation of the surrounding vehicle C1 is determined based on the correlation between the sound signals, and driving assistance is performed. In this situation, the approach or separation of the surrounding vehicle C1 seems to be determined based on a significant correlation appearing between the sound signals with excellent accuracy. However, in an actual acoustic environment, for example, traveling sound of the surrounding vehicle C1 is mixed with surrounding noise, a significant correlation does not appear between the sound signals, and it may not possible to determine the approach or separation of the surrounding vehicle C1 with excellent accuracy.

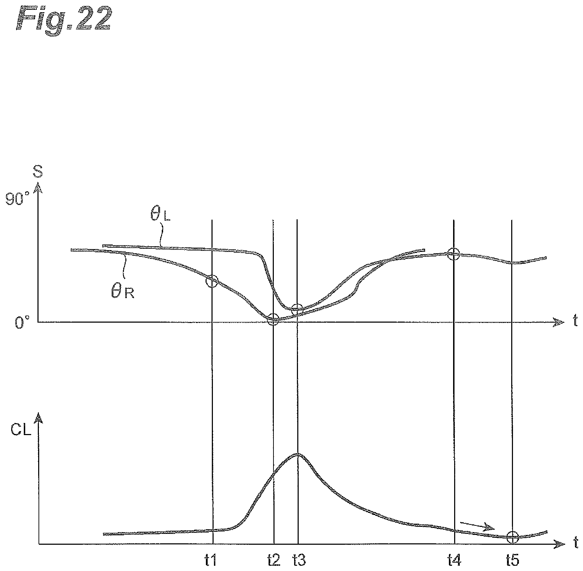

Fig. 22 is a diagram showing fluctuation trend of a sound source direction and a correlation value in connection with Fig. 21. Fig. 22 shows the fluctuation trend of the absolute values of sound source directions θR and θL calculated for the right and left channels and the fluctuation trend of a correlation value CL calculated for the left channel.

As shown in Fig. 22, when the surrounding vehicle C1 approaches from the right direction of the host vehicle C0, traveling sound is collected by the microphone array 11R of the right channel earlier than the microphone array 11L of the left channel. The absolute value of the sound source direction θR of the right channel is less than the first threshold value (for example, about 30° to 40°) at the time t1 and is less than the second threshold value (for example, about 0°) at the time t2. This indicates that the surrounding vehicle C1 approaches the vicinity of the front of the host vehicle C0.

After the surrounding vehicle C1 approaches the vicinity of the front of the host vehicle C0, the absolute value of the gradient of the sound source direction θL of the left channel is less than the third threshold value (about 0) at the time t3, and the fluctuation trend of the sound source direction θL reaches an inflection point. This indicates that the surrounding vehicle C1 starts to separate from the vicinity of the front of the host vehicle C0. Next, the absolute value of the gradient of the sound source direction θL is less than the fourth threshold value (about 0) at the time t4, the fluctuation trend of the sound source direction θL reaches an inflection point, and the absolute value of the sound source direction θL is equal to or greater than the fifth threshold value (for example, about 60°). This indicates that the surrounding vehicle C1 separates from the host vehicle C0 to some extent. In addition, the gradient of the correlation value CL of the left channel is equal to or greater than the sixth threshold value (about 0), and the fluctuation of the correlation value CL reaches an inflection point. This indicates that the surrounding vehicle C1 sufficiently separates from the host vehicle C0 and the separation is completed.

In this way, the approach or separation of a surrounding vehicle is determined based on the sound source direction and the fluctuation trend of the degree of correlations, whereby it is possible to perform the driving assistance of the host vehicle according to the approach or separation of the surrounding vehicle. Furthermore, the timing at which the surrounding vehicle starts to separate is determined, whereby it is possible to end the driving assistance for the surrounding vehicle and to start driving assistance for another surrounding vehicle at an early timing. In addition, when a surrounding vehicle is far away, the calculation accuracy of the sound source direction is degraded; however, since the fluctuation trend of the degree of correlation is considered, it is possible to determine the separation completion of the surrounding vehicle with excellent accuracy.

As described above, according to the fifth embodiment of the invention, it is possible to perform driving assistance based on the specific phase difference corresponding to the peak of the phase correlation between the sound signals, that is, the degree of temporal fluctuation of the sound source direction, and the correlation between the sound signals even in a situation in which the degree of correlation between the sound signals is not conspicuous. Furthermore, it is possible to determine the approach or separation of a surrounding object based on the degree of fluctuation of the sound source direction and the correlation between the sound signals.

Next, a notification device and method according to a sixth embodiment of the invention will be described. The sixth embodiment is different from other embodiments in that a notification to the outside of a vehicle is controlled based on a degree of temporal fluctuation of phase information of sound signals. The notification device is mounted in a vehicle, and gives a notification of the traveling state of the vehicle to other vehicles based on the degree of temporal fluctuation of the phase information of the sound signals. For the notification, for example, actuation of a horn, blinking of a light, inter-vehicle communication, or the like is used. A notification operation is executed, for example, based on the stability index, the peak value of the phase distribution, and the degree of fluctuation of the sound source direction.

As described above, according to the sixth embodiment of the invention, it is possible to control a notification to the outside of the vehicle based on the degree of temporal fluctuation of the phase information of the sound signals even in a situation in which the degree of correlation between the sound signals is not conspicuous.

It should be noted that the foregoing embodiments describe a best mode for carrying out the sound detection device and method, the driving assistance device and method, and the notification device and method according to the invention, and that the sound detection device and method, and the driving assistance device and method, and the notification device and method according to the invention are not limited to those described in conjunction with the embodiments. The sound detection device and method, the driving assistance device and method, and the notification device and method according to the invention may be those obtained by modifying the sound detection device and method, the driving assistance device and method, and the notification device and method according to the embodiments or by applying them to other, without departing from the gist of the invention.

For example, in the first to fourth embodiments, a case where the microphone array 11 is constituted by the two microphones 11a and 11b, and sound signal information of all microphones constituting the microphone array 11 is used has been described. However, when a microphone array is constituted by three or more microphones, sound signal information of at least two microphones among the microphones constituting the microphone array may be used. Similarly, in the fifth embodiment, when each of the microphone arrays 11L and 11R is constituted by three or more microphones, sound signal information of at least two microphones among the microphones constituting each of the microphone arrays 11L and 11R may be used.

Reference Signs List

11, 11L, 11R: microphone array, 12: driving assistance execution unit, 20, 30, 40, 50, 60: electronic control unit (ECU), 21, 31, 41, 51, 61, 61L, 61R: phase information calculation unit, 22, 32, 42: fluctuation degree calculation unit, 23, 34, 45, 53, 64: driving assistance control unit, 33, 44: threshold value setting unit, 43, 52, 62, 62L, 62R: sound source direction calculation unit, 63, 63L, 63R: correlation information calculation unit.

**Claims**

1.  A sound detection device comprising:

    two or more sound collection units disposed apart from one another, at least two of said two or more sound collection units respectively collecting a first sound signal and a second sound signal;
    a phase information calculation unit (21, 31, 41) configured to calculate a phase distribution representing the relationship of the phase difference between said first sound signal and second sound signal, and the phase correlation between said first sound signal and second sound signal in the same phase difference by delaying the second sound signal with a plurality of delay quantities with respect to the first sound signal and obtaining the phase correlation between the first sound signal and the second sound signal in each delay quantity;
    a fluctuation degree calculation unit (22, 32, 42) configured to calculate a degree of temporal fluctuation of the phase distribution expressed as a stability index that is obtained as direction cosine of a vector of a phase correlation at a time t and a vector of a phase correlation at a time t-$\Delta$t; and
    a surrounding object detection unit configured to detect a surrounding object as a local sound source using the stability index.

2.  The sound detection device according to claim 1,

    wherein the surrounding object detection unit determines that the surrounding object is present when the stability index is equal to or greater than a predetermined threshold value.

3.  The sound detection device according to claim 1, further comprising:

    a threshold value setting unit (33, 44) configured to set a threshold value based on the stability index,
    wherein the phase information calculation unit (21, 31, 41) obtains a peak of the phase distribution, and
    the surrounding object detection unit determines that the surrounding object is present when the peak is equal to or greater than the threshold value.

4.  The sound detection device according to claim 3,

wherein the threshold value setting unit (33, 44) sets the threshold value to be smaller as the stability index increases.

5. The sound detection device according to claim 3,

   wherein the threshold value setting unit (33, 44) sets the threshold value to be smaller as the stability index increases and a specific phase difference corresponding to the peak increases.

6. The sound detection device according to claim 3,

   wherein the surrounding object detection unit determines a presence of the surrounding object to be greater as a specific phase difference corresponding to the peak increases.

7. The sound detection device according to claim 1 or 3,

   wherein the surrounding object detection unit determines the surrounding object to be closer as the stability index increases.

8. The sound detection device according to claim 7,

   wherein the surrounding object detection unit determines that the surrounding object is approaching when the stability index becomes great with time.

9. The sound detection device according to any one of claims 3 to 6,

   wherein the surrounding object detection unit determines the surrounding object to separate farther as a fluctuation in a specific phase difference corresponding to the peak increases.

10. The sound detection device according to claim 9,

    wherein the surrounding object detection unit determines that the surrounding object is separating when a fluctuation in a specific phase difference corresponding to the peak becomes great with time.

11. The sound detection device according to any one of claims 1 to 10,

    wherein the surrounding object detection unit functions as a driving assistance control unit (23, 34, 45) configured to control driving assistance of a vehicle using the stability index.

12. The sound detection device according to claim 11,

    wherein the phase information calculation unit (21, 31, 41) obtains a peak of the phase distribution, and the surrounding object detection unit functioning as the driving assistance unit further facilitates the driving assistance as a specific phase difference corresponding to the peak increases.

13. The sound detection device according to claim 11,

    wherein the surrounding object detection unit functioning as the driving assistance unit further facilitates the driving assistance as the stability index increases.

14. The sound detection device according to any one of claims 1 to 13, further comprising:

    a notification control unit configured to control a notification to the outside of a vehicle using the stability index.

15. The sound detection device according to claim 14,

    wherein the phase information calculation unit (21, 31, 41) obtains a peak of the phase distribution, and the notification control unit further facilitates the notification as a specific phase difference corresponding to the peak increases.

**Patentansprüche**

1. Schallerfassungsvorrichtung, mit:

    zwei oder mehr voneinander getrennt angeordneten Schallaufnahmeeinheiten, wobei zumindest zwei der zwei oder mehr Schallaufnahmeeinheiten jeweils ein erstes Schallsignal und ein zweites Schallsignal aufnehmen; einer Phaseninformationsberechnungseinheit (21, 31, 41), die zum Berechnen einer Phasenverteilung, die die Beziehung der Phasendifferenz zwischen dem ersten Schallsignal und dem zweiten Schallsignal repräsentiert, und der Phasenkorrelation zwischen dem ersten Schallsignal und dem zweiten Schallsignal bei derselben Phasendifferenz durch Verzögern des zweiten Schallsignals mit einer Vielzahl von Verzögerungsmengen hinsichtlich des ersten Schallsignals sowie Erlangen der Phasenkorrelation zwischen dem ersten Schallsignal und dem zweiten Schallsignal bei jeder Verzögerungsmenge, eingerichtet ist; einer Schwankungsgradberechnungseinheit (22, 32, 42), die zum Berechnen eines Grades einer zeitlichen Schwankung der Phasenverteilung ausgedrückt als Stabilitätsindex, der als Richtungs-Kosinus eines Vektors einer Phasenkorrelation zu einer Zeit t und eines Vektors einer Phasenkorrelation zu einer Zeit t - Δt erlangt wird, eingerichtet ist; und einer Umgebungsobjekterfassungseinheit, die zum Erfassen eines Umgebungsobjektes als einer lokalen Schallquelle unter Verwendung des Stabilitätsindexes eingerichtet ist.

2. Schallerfassungsvorrichtung nach Anspruch 1,

    wobei die Umgebungsobjekterfassungseinheit bestimmt, dass das Umgebungsobjekt vorhanden ist, falls der Stabilitätsindex größer oder gleich einem vorbestimmten Schwellenwert ist.

3. Schallerfassungsvorrichtung nach Anspruch 1, weiter mit:

    einer Schwellenwerteinstellungseinheit (33, 44), die zum Einstellen eines Schwellenwertes auf der Grundlage des Stabilitätsindexes eingerichtet ist, wobei die Phaseninformationsberechnungseinheit (21, 31, 41) einen Spitzenwert der Phasenverteilung erlangt, und die Umgebungsobjekterfassungseinheit bestimmt, dass das Umgebungsobjekt vorhanden ist, falls der Spitzenwert größer als oder gleich zu dem Schwellenwert ist.

4. Schallerfassungsvorrichtung nach Anspruch 3,

    wobei die Schwellenwerteinstellungseinheit (33, 44) den Schwellenwert mit höherem Stabilitätsindex niedriger einstellt.

5. Schallerfassungsvorrichtung nach Anspruch 3,

    wobei die Schwellenwerteinstellungseinheit (33, 44) den Schwellenwert mit höherem Stabilitätsindex und höherer dem Spitzenwert entsprechender spezifischer Phasendifferenz niedriger einstellt.

6. Schallerfassungsvorrichtung nach Anspruch 3,

    wobei die Umgebungsobjekterfassungseinheit eine Präsenz eines Umgebungsobjektes mit höherer dem Spitzenwert entsprechender spezifischer Phasendifferenz als größer bestimmt.

7. Schallerfassungsvorrichtung nach Anspruch 1 oder 3,

    wobei die Umgebungsobjekterfassungseinheit das Umgebungsobjekt mit höherem Stabilitätsindex als näher bestimmt.

8. Schallerfassungsvorrichtung nach Anspruch 7,

    wobei die Umgebungsobjekterfassungseinheit bestimmt, dass das Umgebungsobjekt sich nähert, falls der Stabilitätsindex mit der Zeit groß wird.

9. Schallerfassungsvorrichtung nach einem der Ansprüche 3 bis 6,

wobei die Umgebungsobjekterfassungseinheit mit einer höheren Abweichung bei einer dem Spitzenwert entsprechenden spezifischen Phasendifferenz bestimmt, dass das Umgebungsobjekt sich weiter entfernt.

10. Schallerfassungsvorrichtung nach Anspruch 9,

wobei die Umgebungsobjekterfassungseinheit bestimmt, dass das Umgebungsobjekt sich entfernt, falls eine Abweichung bei einer dem Spitzenwert entsprechenden spezifischen Phasendifferenz mit der Zeit groß wird.

11. Schallerfassungsvorrichtung nach einem der Ansprüche 1 bis 10,

wobei die Umgebungsobjekterfassungseinheit als Fahrassistenzsteuereinheit (23, 34, 45) wirkt, die zur Steuerung einer Fahrassistenz eines Fahrzeuges unter Verwendung des Stabilitätsindexes eingerichtet ist.

12. Schallerfassungsvorrichtung nach Anspruch 11,

wobei die Phaseninformationsberechnungseinheit (41, 31, 41) einen Spitzenwert der Phasenverteilung erlangt, und
die Umgebungsobjekterfassungseinheit, die als die Fahrassistenzeinheit wirkt, ferner die Fahrassistenz ermöglicht, sowie eine dem Spitzenwert entsprechende spezifische Phasendifferenz sich erhöht.

13. Schallerfassungsvorrichtung nach Anspruch 11,

wobei die als Fahrassistenzeinheit wirkende Umgebungsobjekterfassungseinheit ferner die Fahrassistenz ermöglicht, sowie sich der Stabilitätsindex erhöht.

14. Schallerfassungsvorrichtung nach einem der Ansprüche 1 bis 13, weiter mit:

einer Benachrichtigungssteuereinheit, die zum Steuern einer Benachrichtigung an das Äußere eines Fahrzeuges unter Verwendung des Stabilitätsindex eingerichtet ist.

15. Schallerfassungsvorrichtung nach Anspruch 14,

wobei die Phaseninformationsberechnungseinheit (21, 31, 41) eine Spitzenwert der Phasenverteilung erlangt, und
die Benachrichtigungssteuereinheit ferner die Benachrichtigung ermöglicht, sowie eine dem Spitzenwert entsprechende spezifische Phasendifferenz sich erhöht.

**Revendications**

1. Dispositif de détection de son comprenant :

deux unités de collecte de son ou plus espacées l'une de l'autre, au moins deux desdites deux unités de collecte de son ou plus collectant respectivement un premier signal sonore et un second signal sonore ;
une unité de calcul d'informations de phase (21, 31, 41) configurée de manière à calculer une distribution de phase représentant la relation de la différence de phase entre ledit premier signal sonore et ledit second signal sonore, et la corrélation de phase entre ledit premier signal sonore et ledit second signal sonore dans la même différence de phase, en retardant le second signal sonore d'une pluralité de quantités de retard relativement au premier signal sonore, et en obtenant la corrélation de phase entre le premier signal sonore et le second signal sonore dans chaque quantité de retard ;
une unité de calcul de degré de fluctuation (22, 32, 42) configurée de manière à calculer un degré de fluctuation temporelle de la distribution de phase, exprimé sous la forme d'un indice de stabilité qui est obtenu en tant qu'un cosinus de direction d'un vecteur d'une corrélation de phase à un instant $t$ et d'un vecteur d'une corrélation de phase à un instant $t-\Delta t$ ; et
une unité de détection d'objet environnant configurée de manière à détecter un objet environnant en tant qu'une source sonore locale en utilisant l'indice de stabilité.

**2.** Dispositif de détection de son selon la revendication 1,
dans lequel l'unité de détection d'objet environnant détermine que l'objet environnant est présent lorsque l'indice de stabilité est égal ou supérieur à une valeur de seuil prédéterminée.

**3.** Dispositif de détection de son selon la revendication 1, comprenant en outre :

une unité de définition de valeur de seuil (33, 44) configurée de manière à définir une valeur de seuil sur la base de l'indice de stabilité ;
dans lequel l'unité de calcul d'informations de phase (21, 31, 41) obtient une crête de la distribution de phase ; et l'unité de détection d'objet environnant détermine que l'objet environnant est présent lorsque le crête est égale ou supérieure à la valeur de seuil.

**4.** Dispositif de détection de son selon la revendication 3,
dans lequel l'unité de définition de valeur de seuil (33, 44) définit la valeur de seuil afin qu'elle diminue à mesure que l'indice de stabilité augmente.

**5.** Dispositif de détection de son selon la revendication 3,
dans lequel l'unité de définition de valeur de seuil (33, 44) définit la valeur de seuil afin qu'elle diminue à mesure que l'indice de stabilité augmente et qu'une différence de phase spécifique correspondant à la crête augmente.

**6.** Dispositif de détection de son selon la revendication 3,
dans lequel l'unité de détection d'objet environnant détermine une présence de l'objet environnant comme étant plus probable à mesure qu'une différence de phase spécifique correspondant à la crête augmente.

**7.** Dispositif de détection de son selon la revendication 1 ou 3,
dans lequel l'unité de détection d'objet environnant détermine que l'objet environnant est plus proche à mesure que l'indice de stabilité augmente.

**8.** Dispositif de détection de son selon la revendication 7,
dans lequel l'unité de détection d'objet environnant détermine que l'objet environnant se rapproche lorsque l'indice de stabilité augmente au fil du temps.

**9.** Dispositif de détection de son selon l'une quelconque des revendications 3 à 6,
dans lequel l'unité de détection d'objet environnant détermine que l'objet environnant s'éloigne davantage à mesure qu'une fluctuation dans une différence de phase spécifique correspondant à la crête augmente.

**10.** Dispositif de détection de son selon la revendication 9,
dans lequel l'unité de détection d'objet environnant détermine que l'objet environnant s'éloigne lorsqu'une fluctuation dans une différence de phase spécifique correspondant à la crête augmente au fil du temps.

**11.** Dispositif de détection de son selon l'une quelconque des revendications 1 à 10,
dans lequel l'unité de détection d'objet environnant fonctionne en tant qu'une unité de commande d'assistance à la conduite (23, 34, 45) configurée de manière à commander une assistance à la conduite d'un véhicule, en utilisant l'indice de stabilité.

**12.** Dispositif de détection de son selon la revendication 11,
dans lequel l'unité de calcul d'informations de phase (21, 31, 41) obtient une crête de la distribution de phase ; et l'unité de détection d'objet environnant fonctionnant en tant que l'unité d'assistance à la conduite facilite en outre l'assistance à la conduite à mesure qu'une différence de phase spécifique correspondant à la crête augmente.

**13.** Dispositif de détection de son selon la revendication 11,
dans lequel l'unité de détection d'objet environnant fonctionnant en tant que l'unité d'assistance à la conduite facilite en outre l'assistance à la conduite à mesure que l'indice de stabilité augmente.

**14.** Dispositif de détection de son selon l'une quelconque des revendications 1 à 13, comprenant en outre :

une unité de commande de notification configurée de manière à commander une notification vers l'extérieur d'un véhicule en utilisant l'indice de stabilité.

**15.** Dispositif de détection de son selon la revendication 14,
dans lequel l'unité de calcul d'informations de phase (21, 31, 41) obtient une crête de la distribution de phase ; et
l'unité de commande de notification facilite en outre la notification à mesure qu'une différence de phase spécifique
correspondant à la crête augmente.

*Fig.1*

EP 2 924 673 B1

MICROPHONE ARRAY 11

11a 11b

ECU 20

PHASE INFORMATION CALCULATION UNIT 21

VARIATION DEGREE CALCULATION UNIT 22

DRIVING ASSISTANCE CONTROL UNIT 23

DRIVING ASSISTANCE EXECUTION UNIT 12

*Fig.2*

```
                    ┌─────────────┐
                    │    START    │
                    └──────┬──────┘
                           │
         ┌─────────────────┴─────────────────┐
         │  CALCULATE PHASE INFORMATION       │──── S11
         └─────────────────┬─────────────────┘
                           │
         ┌─────────────────┴─────────────────┐
         │  CALCULATE DEGREE OF VARIATION     │──── S12
         │      OF PHASE INFORMATION          │
         └─────────────────┬─────────────────┘
                           │
         ┌─────────────────┴─────────────────┐
         │ DETERMINE PRESENCE OF SURROUNDING  │──── S13
         │      OBJECT BASED ON DEGREE OF     │
         │  VARIATION OF PHASE INFORMATION    │
         └─────────────────┬─────────────────┘
                           │
         ┌─────────────────┴─────────────────┐
         │   EXECUTE DRIVING ASSISTANCE       │──── S14
         │      ACCORDING TO PRESENCE         │
         │    OF SURROUNDING OBJECT           │
         └─────────────────┬─────────────────┘
                           │
                    ┌──────┴──────┐
                    │   RETURN    │
                    └─────────────┘
```

23

Fig.3

Fig.4

(a)

(b)

## *Fig.5*

(a)

(b)

EP 2 924 673 B1

Fig.6

MICROPHONE ARRAY — 11
11a  11b

ECU — 30
PHASE INFORMATION CALCULATION UNIT — 31
VARIATION DEGREE CALCULATION UNIT — 32
THRESHOLD VALUE SETTING UNIT — 33
DRIVING ASSISTANCE CONTROL UNIT — 34

DRIVING ASSISTANCE EXECUTION UNIT — 12

*Fig.7*

```
                    ┌───────────┐
                    │   START   │
                    └─────┬─────┘
                          │
          ┌───────────────┴────────────────┐
          │  CALCULATE PHASE INFORMATION    │──── S21
          └───────────────┬────────────────┘
                          │
          ┌───────────────┴────────────────┐
          │  CALCULATE DEGREE OF VARIATION  │──── S22
          │       OF PHASE INFORMATION      │
          └───────────────┬────────────────┘
                          │
          ┌───────────────┴────────────────┐
          │ SET THRESHOLD VALUE TO BE SMALLER│
          │ WHEN DEGREE OF VARIATION OF PHASE│──── S23
          │      INFORMATION IS SMALLER      │
          └───────────────┬────────────────┘
                          │
          ┌───────────────┴──────────────────┐
          │DETERMINE PRESENCE OF SURROUNDING  │
          │OBJECT BASED ON PHASE INFORMATION  │──── S24
          │        AND THRESHOLD VALUE        │
          └───────────────┬──────────────────┘
                          │
          ┌───────────────┴────────────────┐
          │   EXECUTE DRIVING ASSISTANCE    │
          │      ACCORDING TO PRESENCE      │──── S25
          │     OF SURROUNDING OBJECT       │
          └───────────────┬────────────────┘
                          │
                    ┌─────┴─────┐
                    │  RETURN   │
                    └───────────┘
```

*Fig.8*

*Fig.9*

$$d = C \cdot \Delta t$$

*Fig.10*

```
        ┌─────────────┐
        │    START    │
        └──────┬──────┘
               │
   ┌───────────┴────────────┐
   │ CALCULATE PHASE         │──── S31
   │ INFORMATION             │
   └───────────┬────────────┘
               │
   ┌───────────┴────────────┐
   │ CALCULATE DEGREE OF     │──── S32
   │ VARIATION OF PHASE      │
   │ INFORMATION             │
   └───────────┬────────────┘
               │
   ┌───────────┴────────────┐
   │ CALCULATE SOUND SOURCE  │──── S33
   │ DIRECTION BASED ON      │
   │ PHASE INFORMATION       │
   └───────────┬────────────┘
               │
   ┌───────────┴────────────┐
   │ SET THRESHOLD VALUE TO  │──── S34
   │ BE SMALLER WHEN DEGREE  │
   │ OF VARIATION OF PHASE   │
   │ INFORMATION IS SMALLER  │
   │ AND SOUND SOURCE        │
   │ DIRECTION IS LATERAL    │
   │ SIDE                    │
   └───────────┬────────────┘
               │
   ┌───────────┴────────────┐
   │ DETERMINE PRESENCE OF   │──── S35
   │ SURROUNDING OBJECT      │
   │ BASED ON PHASE          │
   │ INFORMATION AND         │
   │ THRESHOLD VALUE         │
   └───────────┬────────────┘
               │
   ┌───────────┴────────────┐
   │ EXECUTE DRIVING         │──── S36
   │ ASSISTANCE ACCORDING    │
   │ TO PRESENCE OF          │
   │ SURROUNDING OBJECT      │
   └───────────┬────────────┘
               │
        ┌──────┴──────┐
        │   RETURN    │
        └─────────────┘
```

EP 2 924 673 B1

*Fig.11*

# Fig.12

| DETECTION TIMING (SECOND) | | IMPROVED DETECTION TIMING VALUE (SECOND) |
|---|---|---|
| THRESHOLD VALUE WITHOUT CONSIDERATION OF SOUND SOURCE DIRECTION | THRESHOLD VALUE IN CONSIDERATION OF SOUND SOURCE DIRECTION | |
| 3.3 | 1.2 | 2.1 |
| 3.4 | 0.8 | 2.6 |
| 3.8 | 1.1 | 2.7 |
| 5.0 | 2.8 | 2.2 |
| 5.1 | 2.4 | 2.7 |
| 5.7 | 3.5 | 2.2 |
| 7.0 | 4.9 | 2.1 |

EP 2 924 673 B1

*Fig.13*

Fig.14

$d = C \cdot \Delta t$

*Fig.15*

```
        ┌─────────────┐
        │   START     │
        └─────────────┘
               │
   ┌───────────────────────────────┐
   │  CALCULATE PHASE INFORMATION   │──S41
   └───────────────────────────────┘
               │
   ┌───────────────────────────────┐
   │  CALCULATE DEGREE OF VARIATION │
   │    OF SOUND SOURCE DIRECTION   │──S42
   │    BASED ON PHASE INFORMATION  │
   └───────────────────────────────┘
               │
   ┌───────────────────────────────┐
   │ DETERMINE APPROACH OR SEPARATION OF │
   │ SURROUNDING OBJECT BASED ON DEGREE OF │──S43
   │ VARIATION OF SOUND SOURCE DIRECTION │
   └───────────────────────────────┘
               │
   ┌───────────────────────────────┐
   │     EXECUTE DRIVING ASSISTANCE │
   │ ACCORDING TO APPROACH OR SEPARATION │──S44
   │      OF SURROUNDING OBJECT     │
   └───────────────────────────────┘
               │
        ┌─────────────┐
        │   RETURN    │
        └─────────────┘
```

EP 2 924 673 B1

## Fig.16

$\theta = 0°$

C1

$\theta = -90°$

$\theta = 90°$

C0

## Fig.17

(a)

(b)

Fig.18

MICROPHONE ARRAY — 11L

11a — ○ ○ — 11b

MICROPHONE ARRAY — 11R

11a — ○ ○ — 11b

ECU — 60

PHASE INFORMATION CALCULATION UNIT — 61L
PHASE INFORMATION CALCULATION UNIT — 61R
} 61

SOUND SOURCE DIRECTION CALCULATION UNIT — 62L
SOUND SOURCE DIRECTION CALCULATION UNIT — 62R
} 62

CORRELATION INFORMATION CALCULATION UNIT — 63L
CORRELATION INFORMATION CALCULATION UNIT — 63R
} 63

DRIVING ASSISTANCE CONTROL UNIT — 64

DRIVING ASSISTANCE EXECUTION UNIT — 12

EP 2 924 673 B1

*Fig.19*

$d = C \cdot \Delta t$

*Fig.20*

START

CALCULATE PHASE INFORMATION —S51

CALCULATE DEGREE OF VARIATION
OF SOUND SOURCE DIRECTION —S52
BASED ON PHASE INFORMATION

CALCULATE CORRELATION INFORMATION —S53
BETWEEN SOUND SIGNALS

DETERMINE APPROACH OR SEPARATION OF
SURROUNDING OBJECT BASED ON DEGREE —S54
OF VARIATION OF SOUND SOURCE DIRECTION
AND CORRELATION INFORMATION

EXECUTE DRIVING ASSISTANCE
ACCORDING TO APPROACH OR SEPARATION —S55
OF SURROUNDING OBJECT

RETURN

EP 2 924 673 B1

Fig.21

42

Fig.22

**EP 2 924 673 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5092767 U

- WO 2012115205 A1